# EUROPÄISCHE PATENTSCHRIFT

(11) **EP 4 390 267 B1**
(45) Veröffentlichungstag und Bekanntmachung des Hinweises auf die Patenterteilung: **01.10.2025**
(21) Anmeldenummer: 22216019.4
(22) Anmeldetag: 22.12.2022
(51) Int. Cl.: F24S 20/62, F24S 25/12, F24S 25/65, F24S 25/70, H02S 20/10, F24S 25/00, E04H 17/00, E04H 17/14, F24S 25/60

(54) **TRAGKONSTRUKTION FÜR EINE PHOTOVOLTAIK-ANLAGE**
SUPPORT STRUCTURE FOR A PHOTOVOLTAIC SYSTEM
STRUCTURE PORTEUSE POUR UNE INSTALLATION PHOTOVOLTAÏQUE

(43) Veröffentlichungstag der Anmeldung: 26.06.2024
(73) Patentinhaber: Next2Sun Technology GmbH, 66763 Dillingen (DE)
(72) Erfinder: HILDEBRANDT, Heiko, 66763 Dillingen (DE); HOFF, Florian, 66763 Dillingen (DE); BENDIX, Peter, 66763 Dillingen (DE); SCHNEIDER, Thomas, 66763 Dillingen (DE); OLLINGER, Stefan, 66763 Dillingen (DE)
(74) Vertreter: Mertzlufft-Paufler, Cornelius

(56) Entgegenhaltungen:
- DE-U1- 202020 104 397
- FR-A1- 2 955 924
- JP-A- 2004 257 100
- US-B2- 11 411 525

## Beschreibung

Die Erfindung betrifft eine Tragkonstruktion für eine Photovoltaik (PV)-Anlage, die insbesondere dazu ausgestaltet sein kann, aufrecht stehende, vorzugsweise bifaziale, Photovoltaik-Module zu tragen (bifaziale PV-Module können Sonnenlicht vorder- und rückseitig empfangen und dabei jeweils in elektrischen Strom wandeln). Hierbei weist die Tragkonstruktion mehrere Pfosten auf, die an oder im Erdreich befestigt, insbesondere verankert, sind, wobei an den Pfosten Riegel befestigt sind, die jeweils zwei benachbarte Pfosten miteinander verbinden.

Ferner betrifft die Erfindung eine PV-Anlage mit mehreren, vorzugsweise bifazialen, PV-Modulen, die aufrechtstehend an einer solchen Tragkonstruktion angeordnet sind. Unter "aufrechtstehend" können hierbei auch Ausgestaltungen verstanden werden, bei denen ein Aufstellungswinkel der PV-Module 80° oder gar nur 70° zur Horizontalen beträgt.

Schließlich betrifft die Erfindung noch ein Verfahren zur Montage eines wie zuvor erläuterten Adapterelements an einem Pfosten einer Tragkonstruktion einer PV-Anlage. Auch hierbei weist die Tragkonstruktion mehrere Pfosten auf, die an oder im Erdreich befestigt, insbesondere verankert, sind, und an den Pfosten werden Riegel befestigt, um so zwei benachbarte Pfosten miteinander zu verbinden, wobei die Riegel jeweils mittels wenigstens eines separaten Adapterelements an einem der Pfosten befestigt werden, und zwar vorzugsweise unabhängig von den PV-Modulen der PV-Anlage.

Tragkonstruktionen, die aus vertikal verlaufenden Pfosten und horizontal verlaufenden Riegel zusammengesetzt sind, werden bereits eingesetzt, um PV-Anlagen aufzubauen mit aufrechtstehenden PV-Modulen, die bifazial ausgestaltet sind und somit Sonnenlicht sowohl von der Vorder- als auch von der Rückseite her empfangen können.

Ein möglicher Ansatz, der in EP 3 560 098 B1 beschrieben ist, besteht darin, Laschen zur Befestigung der Riegel direkt an den Pfosten auszubilden, wobei die Laschen beispielsweise an Öffnungen der Pfosten ausgebildet sein können, die als Durchstecköffnungen für die Riegel dienen, sodass die Riegel mehr oder weniger tief in den jeweiligen Pfosten einsteckbar sind. JP 2004 257100 A beschreibt eine Tragkonstruktion gemäß dem Oberbegriff des Anspruchs 1.

Daneben ist es aber auch bereits bekannt, separate Adapterbleche zu verwenden, mit denen ein jeweiliger Riegel in der Gebrauchsposition an dem Pfosten befestigt ist. Hierzu gab es beispielsweise bereits Ansätze, einfache Winkeleisen als derartige Adapterelemente zu verwenden, um diese am jeweiligen Pfosten anzuschrauben. Diese Winkeleisen können dann beispielsweise mit Laschen, die an den Riegeln ausgebildet sind, verschraubt werden, um so die gewünschte Verbindung zwischen Riegel und Pfosten herzustellen.

Hiervon ausgehend, hat es sich die Erfindung zur Aufgabe gemacht, eine Tragkonstruktion für eine PV-Anlage bereitzustellen, die die bei der Verwendung von aufrechtstehenden PV-Modulen auftretenden hohen Windlasten auch bei sehr großer Modulgröße sicher aufnehmen kann und gleichzeitig eine hohe elektrische Effizienz der PV-Anlage als auch einen effizienten Aufbau derselben ermöglicht.

Zur Lösung dieser Aufgabe sind erfindungsgemäß bei einer Tragkonstruktion für eine PV-Anlage die Merkmale von Anspruch 1 vorgesehen. Es wird somit erfindungsgemäß zur Lösung der Aufgabe bei einer Tragkonstruktion der eingangs genannten Art vorgeschlagen, dass die Riegel jeweils mittels wenigstens eines separaten Adapterelements an einem der Pfosten befestigt sind, wobei die Adapterelement jeweils Halteflächen ausbilden, die in Längsrichtung des zugehörigen Riegels ausgerichtet sind, und wobei jeder der Riegel an seinem jeweiligen Ende von wenigstens einer solchen von einem Adapterelement ausgebildeten Haltefläche gehalten ist, und dass das jeweilige Adapterelement flächig an wenigstens zwei Flächen des Pfostens abgestützt ist, die in unterschiedlichen Richtungen jeweils quer zu einer Längsachse (vertikale z-Richtung) des Pfostens verlaufen, nämlich an einer am Boden einer Ausnehmung im Pfosten ausgebildeten Auflagefläche und an einem Flansch, der von einem umgebogenen Ende des jeweiligen Längsprofils ausgebildet ist, wobei das jeweilige Adapterelement hierzu in eine jeweilige Durchgangsöffnung im Pfosten eingesteckt ist, oder an zwei Innenflächen des Längsprofils des Pfostens, sodass das Adapterelement einer Innenkontur des Längsprofils folgt, wobei das jeweilige Adapterelement hierzu in eine jeweilige Durchgangsöffnung im Pfosten eingesteckt ist, oder an zwei Außenflächen des Längsprofils des Pfostens, sodass das Adapterelement einer Außenkontur des Längsprofils folgt.

Dieser Lösungsansatz resultiert einerseits in einer effizienten Ableitung von durch Windlasten erzeugten Momenten über die Adapterelemente in den jeweiligen Pfosten und andererseits können so Anordnungen erhalten werden, die die Verschattungsfreiheit der PV-Module optimieren.

Das jeweilige Adapterelement kann hierbei über (vorzugsweise in z-Richtung verlaufende) Langlöcher verfügen, die es erlauben, einen Riegel in unterschiedlichen z-Höhen mit dem Adapterelement mechanisch zu verbinden, vorzugsweise zu verschrauben.

Jedes der Adapterelemente kann wenigstens eine Haltefläche bieten, an welcher ein zugehöriger Riegel montierbar ist. Vorzugsweise verlaufen die Halteflächen dabei entlang einer Längsrichtung des jeweiligen Riegels, sodass der Riegel in unterschiedlichen x-Positionen entlang seiner Längsrichtung an der Haltefläche montierbar ist. Eine solche Ausgestaltung ist vorteilhaft, um Schwankungen der Abstände zwischen den Pfosten (zum Beispiel aufgrund von Schrägstellungen der Pfosten) ausgleichen zu können.

Da die Tragkonstruktion mehrere Riegel und Pfosten umfasst, die jeweils mittels jeweiliger Adapterelemente miteinander verbunden sind, kann die Tragkonstruktion zahlreiche Adapterelemente umfassen. Vorzugsweise können dabei sämtliche der in der Tragkonstruktion verwendeten Adapterelemente gleichartig ausgestaltet sein. Es können aber beispielsweise auch unterschiedliche erfindungsgemäße Ausgestaltungen und/oder unterschiedliche erfindungsgemäße Anordnungen der Adapterelemente in derselben Tragkonstruktion miteinander kombiniert werden. Daher können sich auch die Pfosten in ihrer jeweiligen Ausgestaltung unterscheiden; beispielsweise kann es linke und rechte Pfosten geben, die unterschiedlich ausgestaltet sind. Gleiches gilt auch für die Riegel, insbesondere deren Enden; auch diese können, müssen aber nicht, gleichartig ausgestaltet sein.

Das Adapterelement ist somit ein eigenes Bauteil, welches so ausgestaltet sein kann, dass es lösbar mit dem zugehörigen Riegel und dem zugehörigen Pfosten verbindbar, vorzugsweise verschraubbar, ist. Eine besonders einfache Ausgestaltung sieht vor, dass das jeweilige Adapterelement als ein gebogenes Blech oder in Form eines Längsprofils mit konstantem Querschnitt ausgestaltet ist. Es versteht sich, dass nicht zwingend sämtliche Adapterelemente, die in der Tragkonstruktion verwendet werden, wie hierin beschrieben oder beansprucht ausgestaltet sein müssen. Beispielsweise lassen sich erfindungsgemäß ausgestaltete und/oder angeordnete Adapterelemente auch mit herkömmlichen einfachen Winkeleisen oder vergleichbaren vorbekannten Adapterelementen kombinieren.

Die erfindungsgemäßen Vorteile dieser Tragkonstruktion lassen sich in PV-Anlagen nutzen, bei denen die PV-Module bifazial ausgestaltet sind und senkrecht/aufrecht stehend an der Tragkonstruktion montiert sind. Eine erfindungsgemäße Tragkonstruktion kann aber auch zum Tragen anderer, am Markt verfügbarer Arten von PV-Modulen, wie zum Beispiel monofazialer PV-Module, eingesetzt werden.

Die Pfosten der Tragkonstruktion können in einer (insbesondere jeweiligen) Reihe angeordnet sein, wobei auch mehrere voneinander beabstandete Reihen vorgesehen sein können. In diesem Fall kann das jeweilige Montagefeld zwischen zwei Pfosten eine Modulebene vorgeben, in welcher PV-Module angeordnet werden können. Die PV-Module können dabei an den Riegeln und/oder Pfosten befestigt sein. Dies kann insbesondere mittels separater Modulhalterungen realisiert sein, die einen äußeren Rand des PV-Moduls umfassen und ihrerseits an einem der Pfosten und/oder Riegel befestigt sind. Solche Modulhalterungen können insbesondere in Form eines Modulrahmens oder auch durch ein separates Bauteil ausgestaltet sein.

Erfindunsgemäß werden die Pfosten, bevorzugt auch die Riegel, als Längsprofile ausgestaltet, besonders bevorzugt als Blechbiegeteile, insbesondere aus verzinktem Stahl.

Die Pfosten können, mindestens in einem Halteabschnitt, ein, insbesondere offenes, Längsprofil mit einer C-förmigen, U-förmigen, Z-förmigen oder S-förmigen Grundform aufweisen. Hierbei können an Enden des Profils Montage- oder Abstützflächen als Flansche ausgebildet sein. Das Adapterelement kann auf einer solchen Abstützfläche flächig abgestützt sein beziehungsweise an einer solchen Montagefläche befestigt sein, vorzugsweise mittels einer Verschraubung, mittels einer Nietverbindung und/oder mittels einer Einsteckvorrichtung.

Bei allen hier erläuterten Tragkonstruktionen mit Durchgangsöffnungen in den Pfosten müssen die Riegel nicht zwingend in die zugehörige Durchgangsöffnung eingeschoben sein, im Sinne einer Durchstecköffnung, in die der jeweilige Riegel mehr oder weniger tief eingesteckt ist. Vielmehr kann ein jeweiliges Ende des Riegels in der finalen Montageposition von dem zugehörigen Pfosten mehr oder weniger weit beabstandet sein. Die Riegel können aber beispielsweise bei Verwendung von halboffenen Längsprofilen für die Pfosten in die einseitigen Öffnungen dieser Profile mehr oder weniger tief eingesteckt werden/sein, also beispielsweise in die einseitige Öffnung eines C-Profils oder eines U-Profils eines der Pfosten.

Alle der hier formulierten Merkmale der Tragkonstruktion können insbesondere in der finalen Montageposition des Adapterelements realisiert sein.

Erfindungsgemäß kann die Aufgabe auch durch weitere vorteilhafte Ausführungen gemäß den Unteransprüchen gelöst werden. Die im Folgenden erläuterten unterschiedlichen Ausgestaltungen der Adapterelemente und/oder Durchgangsöffnungen können dabei auf mannigfaltige Weise miteinander in einer Tragkonstruktion kombiniert werden. Somit kann die Tragkonstruktion beispielsweise unterschiedliche Pfosten mit unterschiedlichen Profilen aufweisen und/oder Pfosten mit unterschiedlich ausgebildeten Durchgangsöffnungen und/oder unterschiedlich ausgebildete Adapterelemente.

Beispielsweise kann vorgesehen sein, dass das jeweilige Adapterelement in die jeweilige Durchgangsöffnung von innen nach außen eingesteckt ist. Es kommt hierbei jedoch nicht auf die Einbaurichtung an, sondern auf die finale Montageposition, in welcher das Adapterelement innenseitig am Längsprofil des Pfostens (also an der Profilinnenseite) anliegen kann und dabei nach außen vom Pfosten absteht / hervorragt. Dadurch kann das Adapterelement wenigstens eine Haltefläche bereitstellen, die von dem Pfosten nach außen absteht.

Hierbei ist es bevorzugt, wenn das jeweilige Adapterelement an einer Innenkontur des Längsprofils entlang geführt und/oder innenseitig an dem Längsprofil, vorzugsweise flächig, abgestützt ist. Vorzugsweise ist dabei wenigstens eine der Innenflächen des Pfostens, auf welcher sich das Adapterelement flächig und/oder stirnseitig abstützt, quer zu einer Einsteckrichtung ausgerichtet, in welcher das Adapterelement in die Durchgangsöffnung einsteckbar ist.

Generell kann hier unter den Begriffen Innenseite, Innenkontur oder innenseitig insbesondere ein erste Seite des Längsprofils verstanden werden; entsprechend kann dann als Außenseite, Außenprofil oder außenseitig eine zweite Seite des Längsprofils verstanden werden, die der ersten Seite gegenüberliegt. Somit kann also beispielsweise auch ein Z- oder S-Profil eine erste (Innen-)Seite und eine zweite gegenüberliegende (Außen-)-Seite aufweisen.

Damit das Adapterelement der Innenkontur des Pfostens folgt, kann bevorzugt vorgesehen sein, dass das Adapterelement mindestens zwei Biegungen aufweist. Diese Biegungen können vorzugsweise in Längsrichtung des Pfostens verlaufen (in der finalen Montageposition).

Gemäß einer bevorzugten Ausgestaltung kann das jeweilige Adapterelement vier Biegungen (also vier Umformungen) aufweisen. Dies ermöglicht ein flächiges Anliegen des Adapterelements an wenigstens drei Innen- oder Außenflächen des Längsprofils des Pfostens. Der Begriff Biegung/Umformung kann hier insbesondere geometrisch verstanden werden, d.h. die Biegung/Umformung muss nicht zwingend über einen Biegevorgang oder einen plastischen Umformvorgang entstanden sein. Beispielsweise kann ein Adapterelement geometrische Biegungen aufweisen, wenn es als Längsprofil ausgestaltet ist, dass mittels eines Gussverfahrens hergestellt wurde. Derartige Ausgestaltungen sind technisch äquivalent zur Herstellung der Biegung mittels eines Biege-/Umformvorgangs.

Bei solchen Ausgestaltungen kann also wenigstens ein Anlageschenkel des Adapterelements an einer Innenkontur des Längsprofils (des Pfostens) flächig anliegen. Besonders bevorzugt sind dabei Ausgestaltungen, bei denen das Adapterelement wenigstens zwei Anlageschenkel ausbildet, die jeweils an zwei Innenflächen des Längsprofils flächig abgestützt sind. Der Begriff "Innenfläche" kann hier so verstanden werden, dass im montierten Zustand des Pfostens eine außenseitige Außenfläche (auf die beispielsweise Sonnenstrahlung fällt) der jeweiligen Innenfläche gegenüberliegt (wobei der Zwischenraum durch das Material des Längsprofils ausgefüllt ist).

Hierbei ist es besonders vorteilhaft, wenn die zwei Innenflächen in unterschiedlichen Richtungen jeweils quer zu einer Längsachse des Pfostens verlaufen und/oder wenn wenigstens eine der Innenflächen quer zu einer Einsteckrichtung verläuft, in welcher das Adapterelement in die Durchgangsöffnung einsteckbar ist. Denn in diesem Fall können Längs- als auch Querkräfte effizient in den Pfosten abgeleitet werden.

Generell kann bei erfindungsgemäßen Durchgangsöffnungen ein Öffnungsquerschnitt der Durchgangsöffnung kleiner gewählt sein als ein Querschnitt des zugehörigen Riegels. Bei einer solchen Ausgestaltung ist der Riegel somit in die Durchgangsöffnung nicht mehr einführbar (anders als bei einer Durchstecköffnung); d.h. der Riegel wird hier ausschließlich über das/die jeweilige(n) Adapterelement(e) gehalten; der Riegel kann aber, beispielsweise bei Verwendung eines C- oder U-Profils für den Pfosten, in eine einseitige Öffnung dieses Profils (zumindest auf einer Seite des Pfostens) mehr oder weniger tief eingesteckt werden/sein. Es versteht sich, dass zu diesem Zweck die einseitige Öffnung des Längsprofils des Pfostens zum zugehörigen Riegel ausgerichtet sein muss, um ein solches Einstecken des Riegels zu ermöglichen.

Gemäß weiteren vorteilhaften Ausgestaltungen, die insbesondere die Verschattung der PV-Module günstig beeinflussen, ist vorgesehen, dass eine Breite der Durchgangsöffnung quer zu einer Längsrichtung des Pfostens höchstens 80 %, vorzugsweise höchstens 60 %, einer zugehörigen Breite des Pfostens (auf Höhe der Durchgangsöffnung) beträgt.

Bei anderen Ausgestaltungen (beispielsweise dann, wenn auf gleicher Höhe zwei schlitzartige Durchgangsöffnungen nebeneinander im selben Pfosten ausgebildet sind) können jeweilige Anlagekanten des Pfostens, die eine jeweilige zugehörige Durchgangsöffnung lateral nach außen begrenzen (also zum Beispiel links und rechts des Riegels), einen Abstand zueinander (gemeint ist hier der Abstand der Außenkanten der Durchgangsöffnung zueinander) und quer zur Längsrichtung des Pfostens aufweisen, der höchstens 80 %, vorzugsweise höchstens 60 % einer zugehörigen Breite des Pfostens beträgt. Denn auch durch solche Ausgestaltungen kann erreicht sein, dass die in der jeweiligen Durchgangsöffnung eingesteckten Adapterelemente jeweils Riegel fassen können, deren Breite weniger als 80 %, insbesondere weniger als 60 %, der Breite des zugehörigen Pfostens beträgt. Durch die Verwendung solch schmaler Riegel bei gleichzeitig breiten Pfosten kann einerseits eine hohe mechanische Stabilität der Pfosten gewährleistet und andererseits die Verschattung der PV-Module durch die Riegel minimiert werden. Hierbei ist es für die Verschattung günstig, wenn die Riegel mittig in Bezug auf Außenkanten der Pfosten montiert sind (in diesem Fall kann eine Mittelebene der Riegel mit der Modulebene, also der Ebene der PV-Module, zusammenfallen).

Eine jeweilige Position einer jeweiligen Anlagekante des Pfostens, die die jeweilige Durchgangsöffnung lateral nach außen begrenzt (und damit die laterale Lage von Halteflächen des in die Durchgangsöffnung eingesteckten Adapterelements festlegt), kann somit nach innen versetzt sein in Richtung auf eine Modulebene, in welcher die aktiven Flächen der PV-Module der PV-Anlage liegen, und zwar in Bezug auf Außenflächen des Pfostens, die von dieser Modulebene lateral beabstandet sind (diese Außenflächen der Pfosten können somit parallel zur und beabstandet von der Modulebene verlaufen). Eine solche Ausgestaltung kann darin resultieren, dass die jeweilige Anlagekante jeweils von einer für die Verschattung relevanten Außenkante des Pfostens, um wenigstens 10%, vorzugweise um wenigstens 20%, einer zugehörigen Breite des Pfostens beabstandet ist. In solchen Fällen kann also erneut ein Riegel gehalten werden, der nur ca. 80% oder sogar nur 60% so breit ist wie der zugehörige Pfosten.

Gemäß einer möglichen Ausgestaltung ist vorgesehen, dass in einzelne der Durchgangsöffnungen des jeweiligen Pfostens Pfosten jeweils nur ein Adapterelement eingesteckt ist. Bei solchen Ausgestaltungen kann das jeweilige Adapterelement insbesondere flächig, also beispielsweise frei von (formgebenden) Biegungen (Versteifungssicken können beispielsweise ausgebildet sein), ausgestaltet sein. Im einfachsten Fall kann ein erfindungsgemäßes Adapterelement somit als Flachstück, insbesondere als rechteckiges flaches Blechstück, ausgestaltet sein.

Alternativ oder ergänzend hierzu können aber auch Durchgangsöffnungen in dem jeweiligen Pfosten ausgebildet werden, die eine Breite aufweisen, die kleiner, vorzugsweise zweimal oder sogar viermal kleiner, ausfällt, als eine Breite des zugehörigen Riegels. Eine erfindungsgemäße Durchgangsöffnung kann also beispielsweise ein Aspektverhältnis von in Längsrichtung des Pfostens gemessener Höhe zu Breite von größer 5:1, oder sogar von größer 10:1 zeigen, je nach Dicke und Höhe des (insbesondere flächigen) Adapterelements. Wirken beispielsweise zwei Durchgangsöffnungen zusammen, indem die jeweils darin eingesteckten Adapterelemente denselben Riegel halten, und ist jeweils nur ein Adapterelement in die jeweilige der beiden zusammenwirkenden Durchgangsöffnungen eingesteckt, so ist es vorteilhaft, wenn diese beiden zusammenwirkenden Durchgangsöffnungen symmetrisch zueinander positioniert sind in Bezug auf eine in Längsrichtung des Pfostens verlaufende Mittelachse des Pfostens. Denn dadurch können die Riegel mittig zu für die Verschattung relevanten Außenkanten des Pfostens angeordnet werden, sodass auch die Modulebene mittig in Bezug auf die eine Verschattung bewirkenden Außenkanten der Pfosten angeordnet werden können. Auch dies reduziert die Verschattung der PV-Module.

Bei wiederum anderen Ausgestaltungen ist vorgesehen, dass in einzelne der Durchgangsöffnungen je mindestens zwei Adapterelemente eingesteckt sind.

Eine erfindungsgemäße Durchgangsöffnung kann auch eine Breite aufweisen, die einer Breite eines zugehörigen Riegels entspricht; je nach Ausgestaltung kann dabei die Breite der Durchgangsöffnung sogar die Breite des Riegels übersteigen, was sich insbesondere anbietet, wenn die Haltefläche der Adapterelemente außenseitig an den Riegeln montiert werden/sind. Bei solch breiten Durchgangsöffnungen ist es vorteilhaft, wenn die Durchgangsöffnung mittig positioniert ist in Bezug auf eine Breite des zugehörigen Pfostens quer zu einer Längsrichtung des zugehörigen Riegels und quer zu einer Längsrichtung des zugehörigen Pfostens. Werden in diesem Fall zwei Adapterelemente in die Durchgangsöffnung eingesteckt, so können diese jeweils links und rechts an Anlagekanten des Pfostens, die die Durchgangsöffnung links und rechts begrenzen, anliegen, sodass auch diese beiden Adapterelemente symmetrisch zu einer Mittelachse des Pfostens ausgerichtet sein können (um so den von den beiden Adapterelementen gehaltenen Riegel mittig in Bezug auf den Pfosten zu positionieren). Je nach Bifazialität des genutzten Solarmodules können aber auch außermittige/nichtmittige Anordnung der Durchgangsöffnungen und der entsprechenden Adapterelemente vorgesehen sein. Dies kann beispielsweise bei Verwendung von monofazialen PV-Modulen zielführend sein, wobei auch in solchen Fällen erfindungsgemäße Ausgestaltungen erhalten werden können.

Bei solchen Ausgestaltungen kann die Durchgangsöffnung, nach Einsetzen des jeweiligen Adapterelements noch in der gesamten Breite des zugehörigen Riegels freigehalten sein. In diesem Fall lässt sich der Riegel somit in die Durchgangsöffnung einführen, die somit als Durchstecköffnung wirkt, in welche der Riegel mehr oder weniger tief einsteckbar ist. Dies ist vorteilhaft, um Variationen der Abstände zwischen den Pfosten ausgleichen zu können. Soll die Durchgangsöffnung auch als Durchstecköffnung dienen, so kann die Durchgangsöffnung hierzu in einer Richtung quer zu einer Längsrichtung der Pfosten mindestens so breit sein wie die Summe aus einer jeweiligen Breite des zugehörigen Riegels und der doppelten Materialstärke des verwendeten Adapterelements. Denn in diesem Fall kann der Riegel beidseitig außenseitig von einem oder zwei Adapterelementen gefasst werden, das/die in die Durchgangsöffnung eingesteckt ist/sind, und gleichzeitig kann der Riegel dabei in die Durchgangsöffnung einführbar sein.

Eine besonders vorteilhafte Ausgestaltung sieht vor, dass das jeweilige Adapterelement verdrehsicher und/oder in wenigstens zwei Richtungen verschiebefest in der Durchgangsöffnung gehalten ist. Beispielsweise kann so das Adapterelement verschiebefest in einer Längsrichtung der Riegel in der Durchgangsöffnung gehalten sein. Solche Ausgestaltungen können beispielsweise erreicht sein mittels einer schlitzförmigen Ausnehmung im Pfosten und/oder mittels einer schlitzförmigen Ausnehmung im Adapterelement selbst.

In der finalen Montageposition können dabei die beiden Ausnehmungen im Pfosten und im Adapterelement selbst aufeinander treffen und so zusammenwirken, dass das Adapterelement in allen drei Raumrichtungen festgelegt ist. Hierzu ist es vorteilhaft, wenn das Adapterelement in der finalen Montageposition quer verläuft zu einer Außenfläche des Pfostens, in welcher die schlitzförmige Ausnehmung eingebracht ist.

Um das Festlegen der finalen Montageposition des Adapterelements mittels der Ausnehmungen zu erleichtern, ist es vorteilhaft, wenn die Ausnehmung im Pfosten eine Breite hat, die mindestens einer Materialstärke des Adapterelements entspricht und/oder wenn die Ausnehmung im Adapterelement eine Breite hat, die mindestens einer Materialstärke des Pfostens entspricht. Für eine orthogonale Festlegung der Position des Adapterelements ist es vorteilhaft, wenn das Adapterelement wenigstens zwei solcher schlitzförmiger Ausnehmungen aufweist, die entlang der z-Achse, also in einer Längsrichtung des Pfostens, ausgerichtet sind, vorzugsweise und miteinander fluchten.

Es kann also insbesondere vorgesehen sein, dass eine finale Montageposition des Adapterelements relativ zum Pfosten durch einen Formschluss zwischen dem Adapterelement und dem Pfosten festgelegt ist. Diese Festlegung kann während der Montage zunächst ohne Fixiermittel bestehen. Für die Festigkeit der Tragkonstruktion ist es aber vorzuziehen, wenn diese finale Montageposition anschließend durch Befestigen des Adapterelements am Pfosten und/oder am Riegel fixiert wird/ist. Die Verdrehsicherung bzw. die Sicherung gegen ein Verschieben kann also insbesondere dadurch erreicht sein, dass in der finalen Montageposition ein Formschluss zwischen dem Adapterelement und dem Pfosten besteht. Hierbei ordnet der Formschluss das Adapterelement drehfest und/oder Verschiebefest zum Pfosten an. Unter einer gegen Verdrehung/Verschiebung gesicherten Halterung kann hier also insbesondere verstanden werden, dass das Adapterelement noch vor der finalen Befestigung mittels Befestigungselementen (wie z.B. Schrauben) bereits drehfest/verschiebefest in der Durchgangsöffnung gehalten ist.

Die jeweilige Ausnehmung im Pfosten und/oder im Adapterelement kann dabei eine laterale Position des Adapterelements (und damit die laterale Position seiner Haltefläche zum Halten des Riegels) in Bezug auf die Modulebene bzw. die Mittelachse des Pfostens festlegen. Hier sind Ausgestaltungen bevorzugt, bei denen die Ausnehmung im Pfosten beabstandet ist zur Mittelachse des Pfostens aber auch zu Außenflächen des Pfostens, die ihrerseits zur Modulebene/Mittelachse beabstandet sind.

Es kann ferner vorgesehen sein, dass das jeweilige Adapterelement auf einer, insbesondere quer oder schräg zur Längsrichtung des Pfostens verlaufenden, Auflagefläche des zugehörigen Pfostens aufliegt beziehungsweise aufsitzt. Ferner sind Ausgestaltungen vorteilhaft, bei denen das jeweilige Adapterelement an einer, vorzugsweise in Längsrichtung des Pfostens verlaufenden, Anlagekante des Pfostens anliegt. Diese Merkmale gelten jeweils für die Situation, wenn das Adapterelement vollständig in die Durchgangsöffnung eingesteckt ist und somit die finale Montageposition erreicht hat. Durch derartige Ausgestaltungen kann also erreicht werden, dass eine z-Position des Adapterelements relativ zum Pfosten durch die besagte Auflagefläche vorgegeben ist und/oder dass eine y-Position des Adapterelements relativ zum Pfosten durch die Anlagekante vorgegeben ist.

Wie bereits erwähnt, können die Adapterelemente jeweils wenigstens eine Haltefläche riegelseitig ausbilden, an welcher der zugehörige Riegel mit einer Innen- oder Außenfläche des Riegels flächig anliegen kann. Beispielsweise kann eine solche Haltefläche den Riegel an einer Außenseite oder aber auf einer Innenseite fassen. Bevorzugt wird dabei jeder der Riegel an seinem jeweiligen Ende von wenigstens zwei solcher Halteflächen gehalten (paarweises Halten). Diese Halteflächen können den Riegel beispielsweise beidseitig außenseitig umfassen oder beidseitig von innen fassen (auch Kombination hiervon sind möglich).

Gemäß einer bevorzugten Ausgestaltung ist vorgesehen, dass je zwei Adapterelemente vorgesehen sind, um ein Paar aus Halteflächen zum Halten eines Riegels (auf einer der beiden Seiten des Pfostens) bereitzustellen. Dadurch kann der zugehörige Riegel an einem Ende an dem Paar aus Halteflächen befestigt werden/sein. Hierbei können beide Halteflächen innenseitig oder beide Halteflächen außenseitig, oder eine Haltefläche außenseitig und die andere Haltefläche innenseitig den jeweiligen Riegel fassen. Auch eine Haltefläche unterhalb oder oberhalb oder unterhalb und oberhalb des Riegels ist bei entsprechender Formgebung des Riegels mit Hilfe der Adapterelemente ausgestaltbar. Alle solche paarweisen Ausgestaltungen von Halteflächen können als technisch äquivalent angesehen werden.

Paare von Halteflächen, wie zuvor beschrieben, können auch beidseitig eines Pfostens ausgebildet sein, insbesondere unter Verwendung von zwei separaten Adapterelementen (wobei dann jedes der beiden Adapterelemente, je eine Haltefläche links und eine Haltefläche rechts des Pfostens zur Verfügung stellt).

Die jeweilige Haltefläche eines Adapterelements kann bevorzugt in Richtung einer Längsrichtung des zu haltenden Riegels ausgerichtet sein. Dies hat den Vorteil, dass bei der Montage/Befestigung des Riegels an der Haltefläche des zugehörigen Adapterelements, vorzugsweise mittels einer Verschraubung, der Riegel in seiner Längsrichtung entlang der Haltefläche verschoben werden kann. Dadurch können Schwankungen der Abstände zwischen den Pfosten, die sich insbesondere bei windschiefer Befestigung der Pfosten im Erdreich ergeben können, ausgeglichen werden.

Es sind auch Ausgestaltungen möglich, bei denen das jeweilige Adapterelement zu beiden Seiten des Pfostens, an welchem das Adapterelement montiert ist, bezogen auf eine Längsrichtung der Riegel wenigstens eine Haltefläche zum Halten eines der Riegel ausbildet. Für eine einfache Montage ist es in diesen Fällen vorteilhaft, wenn die jeweiligen Halteflächen des Adapterelements (links und rechts des Pfostens) in Längsrichtung des zugehörigen Riegels über den Pfosten hinausstehen. Ferner ist es vorteilhaft, wenn diese zwei Halteflächen des Adapterelements links und rechts des Pfostens miteinander fluchten.

Somit kann ein solches Adapterelement zwei Riegel mit einem Pfosten verbinden, wobei die Riegel dann links und rechts des Pfostens angeordnet sind. Das einzelne Adapterelement kann sich dabei insbesondere zu beiden Seiten über den Pfosten hinaus erstrecken. Das Fluchten der Halteflächen bietet den Vorteil, dass die Riegel rechts und links des Pfostens gemeinsam und mittig in Bezug auf eine Modulebene, in welcher sich die aktiven Flächen der PV-Module befinden, angeordnet werden können, was günstig ist, um die Verschattung der PV-Module zu minimieren.

Es kann auch vorgesehen sein, dass das jeweilige Adapterelement zwei Laschen, also insbesondere eine linke und eine rechte Lasche oder beispielsweise eine obere und eine untere Lasche ausbildet, die jeweilige Halteflächen aufweisen beziehungsweise ausbilden. Diese Halteflächen/Laschen können somit insbesondere zum paarweise Halten eines mit dem Adapterelement befestigten Riegels vorgesehen sein. Um die Stabilität eines solchen Adapterelements zu erhöhen, können die beiden Laschen über wenigstens eine Brücke, vorzugsweise über wenigstens zwei Brücken, die von dem Adapterelement ausgebildet ist/sind, miteinander verbunden sein. Ferner bietet es sich bei solchen Ausgestaltungen an, dass die beiden Laschen außenseitig jeweils an einer Anlagekante des Pfostens anliegen, welche die Durchgangsöffnung (in welcher das Adapterelement eingesteckt ist) begrenzt.

Wie bereits erwähnt wurde, können die Pfosten in vorteilhafterweise mit Hilfe von Längsprofilen ausgestaltet sein, wobei die Pfosten insbesondere in einen im Erdreich verankerten Befestigungsabschnitt und einen oberhalb des Erdreichs befindlichen Halteabschnitt aufgeteilt sein können, die miteinander verbunden sind. Bevorzugt können dabei die Längsprofile mit halb offenem Querschnitt, also insbesondere mit C-förmigem, U-förmigem, Z-förmigem oder S-förmigem Querschnitt, ausgebildet sein. Bei einer solchen Ausgestaltung kann das jeweilige Adapterelement zum Beispiel an wenigstens einer Innenfläche, vorzugsweise an wenigstens zwei Innenflächen, und/oder an wenigstens einer Außenfläche, vorzugsweise an wenigstens zwei Außenflächen, des Längsprofils des zugehörigen Pfostens flächig anliegen. Eine weitere Ausgestaltung, die ergänzend oder aber alternativ hierzu eingesetzt werden kann, sieht vor, dass ein Ende des jeweiligen Längsprofils, zumindest abschnittsweise, umgebogen ist, um einen Flansch auszubilden, und wobei das jeweilige Adapterelement an dem Flansch (also zumindest an einem Abschnitt des Flanschs) flächig anliegt.

Die Innen- beziehungsweise Außenflächen des Pfostens können somit als Abstützflächen dienen, an welchen das Adapterelement abgestützt ist und/oder als Montageflächen, an welchen das Adapterelement befestigt, vorzugsweise verschraubt, ist.

Es kann zum Beispiel vorgesehen sein, dass das jeweilige Adapterelement an wenigstens zwei Innenflächen und einer Außenfläche des Längsprofils des zugehörigen Pfostens flächig anliegt. Ferner ist es für eine möglichst stabile Verbindung zwischen Pfosten und Adapterelement bevorzugt, wenn eine der Innenflächen, an welcher das Adapterelement flächig anliegt, quer zu einer Haltefläche des Adapterelements verläuft, die zum Halten eines der Riegel vorgesehen ist. Dadurch können sowohl Zugkräfte entlang einer Längsrichtung des zugehörigen Riegels als auch Torsionsmomente um eine Querachse des zugehörigen Riegels über eine jeweilige Anlagefläche zwischen Adapterelement und Längsprofilaußenfläche oder Längsprofilinnenfläche in den Pfosten sicher abgeleitet werden. Die beiden Innenflächen/die beiden Außenflächen, an denen das Adapterelement flächig anliegt, können sich hierbei bevorzugt gegenüberliegen und insbesondere parallel zueinander verlaufen. Dies ist beispielsweise möglich bei einem C-Längsprofil mit rechteckiger Grundform.

Das jeweilige Adapterelement kann beispielsweise an wenigstens einer Außenfläche des Pfostens befestigt sein, insbesondere an einem Flansch, der von dem Pfosten ausgebildet wird. Alternativ oder ergänzend hierzu kann das jeweilige Adapterelement auch an wenigstens einer Innenfläche des Pfostens befestigt sein.

Gemäß einer weiteren Ausgestaltung ist vorgesehen (sofern eine Durchgangsöffnung verwendet wird, kann diese entsprechend ausgestaltet sein), dass das jeweilige Adapterelement in einer nicht-finalen Montageposition, also noch vor der finalen Befestigung an dem zugehörigen Pfosten, stufenlos entlang einer Längsrichtung des zugehörigen Pfostens verschoben werden kann, insbesondere um so die z-Position des Adapterelements relativ zum Pfosten festzulegen. Zu diesem Zweck kann insbesondere vorgesehen sein, dass das Adapterelement außenseitig auf einer Außenkontur des Pfostens und/oder innenseitig auf einer Innenkontur des Pfostens (jeweils) in Längsrichtung des Pfostens verschiebbar aufliegt. Sofern eine Durchgangsöffnung verwendet wird, kann auch vorgesehen sein, dass das Adapterelement eine Höhe in Längsrichtung des Pfostens aufweist, die kleiner, vorzugsweise wenigstens 20 % kleiner, ausfällt, als eine Höhe der Durchgangsöffnung, in welcher das Adapterelement eingesteckt ist.

Alternativ oder ergänzend hierzu kann aber auch eine Verstellbarkeit des Riegels entlang einer Längsrichtung des zugehörigen Pfostens und relativ zu einem bereits montierten zugehörigen Adapterelement erzielt werden. Dies ist beispielsweise möglich durch Ausbildung von Langlöchern oder Lochrastern im Adapterelement. In diesem Fall kann der Riegel in unterschiedlichen Höhen relativ zum Adapterelement an dem Adapterelement montierbar sein. Zudem können die Halteflächen der Adapterelemente so lang ausgebildet sein (und gegebenenfalls Langlöcher in Längsrichtung der Riegel am Riegel und/oder am Adapterelement ausgebildet sein), dass die Riegel auch in unterschiedlichen Längspositionen an dem Adapterelement montierbar sind. Dadurch kann die effektive Verbindungslänge, die ein Riegel bereitstellt, variiert werden, ohne dass hierfür verschieden lange Riegel eingesetzt / hergestellt werden müssen.

Bevorzugt ist es vorgesehen, dass das jeweilige Adapterelement außenseitig um den jeweiligen Pfosten herumgeführt ist, an welchem das Adapterelement befestigt ist und dass ferner das Adapterelement flächig an wenigstens zwei Außenflächen des Pfostens abgestützt ist, die in unterschiedlichen Richtungen jeweils quer zu einer Längsachse des Pfostens verlaufen.

Es kann ferner vorgesehen sein, dass das Adapterelement auf wenigstens zwei Außenflächen des zugehörigen Pfostens aufliegt, wobei es dann bevorzugt ist, wenn das Adapterelement an wenigstens einer dieser Außenflächen befestigt ist.

Bei wiederum anderen Ausgestaltungen kann das Adapterelement auf wenigstens drei Außenflächen des zugehörigen Pfostens aufliegen. In diesem Fall ist es bevorzugt, wenn das Adapterelement an wenigstens einer dieser drei Außenflächen befestigt ist. Ferner ist es bei solchen Ausgestaltungen möglich, dass das Adapterelement zu beiden Seiten des Pfostens einen jeweiligen Riegel mittels einer Haltefläche hält, wobei es dann bevorzugt ist, wenn die beiden Halteflächen miteinander fluchten.

Der Ansatz des außenseitigen Herumführens des Adapterelements um den Pfosten und der Ansatz der Verwendung von Durchgangsöffnungen kann auch miteinander kombiniert werden. Überhaupt können alle der zuvor erläuterten Merkmale auch bei einem Adapterelement eingesetzt werden, welches außenseitig um den Pfosten herumgeführt ist.

So sieht beispielsweise eine Ausgestaltung vor, dass das jeweilige Adapterelement in zwei Durchgangsöffnungen eines Pfostens eingesteckt ist, die jeweils in dem Pfosten ausgebildet sind, an welchem das Adapterelement befestigt ist. Hierbei kann insbesondere vorgesehen sein, dass das Adapterelement hierzu einmal von außen nach innen und einmal von innen nach außen durch die jeweilige Durchgangsöffnung des Pfostens geführt ist. Das Adapterelement kann hier also außenseitig, vorzugsweise an wenigstens zwei in unterschiedlichen Richtungen verlaufenden Außenflächen des Pfostens abgestützt sein, anschließend eine erste Durchgangsöffnung passieren, nachfolgend innenseitig an dem Pfosten anliegen und schließlich eine zweite Durchgangsöffnung passieren, um so wieder von innen nach außen aus dem Pfosten auszutreten (Diese Betrachtung folgt somit dem Längsverlauf des Adapterelements; die Ausgestaltung ist in den Figuren nicht gezeigt, kann aber anhand der ähnlichen Ausgestaltungsbeispiele mit einfacher Durchgangsöffnung leicht nachvollzogen werden).

Zur Lösung der genannten Aufgabe wird ferner eine Photovoltaik-Anlage mit mehreren bifazialen Photovoltaik-Modulen vorgeschlagen, die aufrechtstehend an einer Tragkonstruktion angeordnet sind. Erfindungsgemäß ist dabei vorgesehen, dass die Tragkonstruktion der PV-Anlage wie zuvor beschrieben oder nach einem der auf eine Tragkonstruktion gerichteten Ansprüche ausgestaltet ist. Hierbei können je zwei Pfosten und zwei Riegel der Tragkonstruktion ein im Wesentlichen rechteckiges Montagefeld aufspannen. In dem Montagefeld kann wenigstens eines der Photovoltaik-Module angeordnet sein; es können aber auch mehrere PV-Module in dem Montagefeld angeordnet sein. Die Ebene innerhalb des Montagefelds, in welcher die aktiven Flächen der Photovoltaik-Module angeordnet sind, kann dabei als Modulebene bezeichnet werden. Dies ist die Ebene, die für die Verschattung relevant ist.

Um die eingangs genannte Aufgabe zu lösen und insbesondere den Aufbau der zuvor erläuterten PV-Anlage zu vereinfachen, schlägt die Erfindung auch ein zugehöriges Verfahren zur Montage eines Adapterelements an einem Pfosten einer Tragkonstruktion einer PV-Anlage vor. Es versteht sich, dass dabei das Adapterelement als auch der Pfosten beziehungsweise die Tragkonstruktion wie zuvor erläutert oder nach einem der Ansprüche auf eine Tragkonstruktion ausgestaltet sein kann.

Zur vereinfachten Montage ist bei diesem Verfahren vorgesehen, dass das jeweilige Adapterelement flächig an wenigstens zwei Flächen des Pfostens abgestützt wird, die in unterschiedlichen Richtungen jeweils quer zu einer Längsachse des Pfostens verlaufen. Anschließend kann dann das jeweilige Adapterelement in der so positionierten finalen Montageposition fest mit dem Pfosten verbunden werden, beispielsweise mittels einer Verschraubung.

Ergänzend oder alternativ kann bei dem Verfahren ferner vorgesehen sein, dass das Adapterelement (zur Positionierung in der finalen Montageposition) in eine Durchgangsöffnung eines der Pfosten, vorzugsweise von innen nach außen, eingesteckt wird. Im Ergebnis ragt so das Adapterelement aus der Durchgangsöffnung nach außen hervor. Dadurch kann eine vom den Adapterelement ausgebildete Haltefläche von Pfosten außenseitig abstehen / hervorstehen (vorzugsweise in Richtung der Längsrichtung der Riegel).

Alternativ oder aber ergänzend kann auch vorgesehen sein, dass das Adapterelement innenseitig an eine Innenkontur eines der Pfosten angelegt wird. Dies kann insbesondere derart geschehen, dass das Adapterelement flächig an zwei Innenflächen des Pfostens abgestützt wird, die in unterschiedlichen Richtungen jeweils quer zu einer Längsachse des Pfostens verlaufen.

Schließlich kann ergänzend und/oder alternativ zu den zuvor erläuterten Merkmalen bei dem Verfahren zur Lösung der Aufgabe auch vorgesehen sein, dass das Adapterelement flächig an wenigstens zwei Außenflächen eines der Pfosten abgestützt wird, die in unterschiedlichen Richtungen jeweils quer zu einer Längsachse des Pfostens verlaufen.

Alle der zuvor erläuterten Verfahrensschritte dienen schlussendlich dazu, das Adapterelement in eine finale Montageposition an dem jeweiligen Pfosten zu positionieren. In der Montageposition kann dann das Adapterelement beispielsweise mit dem Pfosten verschraubt werden oder auf andere Art und Weise kraftschlüssig und/oder formschlüssig (und damit fest) mit dem Pfosten verbunden werden.

Je nach Ausgestaltung des jeweiligen Adapterelements kann bei dem Verfahren ferner vorgesehen sein, dass das jeweilige Adapterelement entlang einer Einsteckrichtung, vorzugsweise von innen nach außen in Bezug auf den Pfosten, in eine Durchgangsöffnung des zugehörigen Pfostens eingesteckt wird, insbesondere um so anschließend innenseitig flächig an dem Pfosten anzuliegen. Hierbei kann insbesondere vorgesehen sein, dass die finale Montageposition des Adapterelements erst durch ein Verschiebend es Adapterelements in einer quer zur Einsteckrichtung verlaufenden Verschieberichtung erreicht wird, während das Adapterelement bereits in die Durchgangsöffnung eingesteckt ist. Dadurch kann insbesondere erreicht werden, dass das Adapterelement in der finalen Montageposition an einer Anlagekante des Pfostens anliegt, die die Durchgangsöffnung begrenzt.

Bei einer weiteren Variante des Verfahrens ist vorgesehen, dass die finale Montageposition des Adapterelements erst durch ein Verschieben und/oder Verkippen des Adapterelements in einer quer zur Einsteckrichtung verlaufenden Verschieberichtung erreicht wird, die entlang einer Längsrichtung des Pfostens verläuft, und zwar während das Adapterelement bereits in die Durchgangsöffnung eingesteckt ist. Durch ein solches Montieren kann erreicht werden, dass das Adapterelement in der finalen Montageposition drehgesichert beziehungsweise drehfest und/oder verschiebefest in der Durchgangsöffnung gehalten ist, wobei hierzu insbesondere die zuvor erläuterten Ausnehmungen im Pfosten oder am Adapterelement selbst dienen können.

Ein weiterer möglicher Verfahrensschritt gemäß der Erfindung sieht vor, dass das jeweilige Adapterelement vorab (also vor dem Einführen in eine zweite Durchgangsöffnung) durch eine erste Durchgangsöffnung eines der Pfosten, insbesondere von außen nach innen in Bezug auf den Pfosten, hindurchgesteckt wird und anschließend durch eine zweite Durchgangsöffnung dieses Pfostens, insbesondere von innen nach außen.

Beim Einführen des Adapterelements in die Durchgangsöffnung kann ferner vorgesehen sein, dass das jeweilige Adapterelement hierzu in schräger Orientierung in Bezug auf eine Längsachse des Pfostens entlang der Einsteckrichtung in die Durchgangsöffnung eingeführt wird. Hierbei ist es bevorzugt, wenn das Adapterelement anschließend um eine Achse der Einsteckrichtung gedreht wird. Ergänzend oder alternativ kann das das Adapterelement auch quer zur Einsteckrichtung, insbesondere quer zu einer Längsrichtung des Pfostens und/oder in einer Längsrichtung des Pfostens verschoben werden, um so die finale Montageposition zu erreichen. Auch durch ein solches Vorgehen kann erreicht werden, dass das Adapterelement in der finalen Montageposition an einer Anlagekante des Pfostens anliegt, die die Durchgangsöffnung begrenzt, und/oder auf einer Auflagefläche des Pfostens aufliegt.

Bei der folgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Fig. 1: ein erstes Beispiel eines Pfostens einer Tragkonstruktion mit einer Durchgangsöffnung, in die ein separates Adapterelement eingeführt wird,
- Fig. 2: ein Beispiel eines Pfostens mit zwei Durchgangsöffnungen, in die jeweils ein jeweiliges Adapterelement einführbar ist,
- Fig. 3: das Beispiel der Figur 1, wobei hier das Adapterelement nun vollständig in die finale Montageposition in der Durchgangsöffnung montiert ist,
- Fig. 4: ein Beispiel eines erfindungsgemäß ausgestalteten Adapterelements, welches innenseitig an zwei Innenflächen des Längsprofils des gezeigten Pfostens anliegt,
- Fig. 5: ein Beispiel eines erfindungsgemäßen Adapterelements, welches in eine Durchgangsöffnung eines Pfostens eingesteckt ist und dabei zwei Laschen ausbildet, die zum paarweise Halten eines Riegels vorgesehen sind,
- Fig. 6: eine Draufsicht des Ausgestaltungsbeispiels der Figur 5,
- Fig. 7 und Fig. 8: zwei unterschiedliche Ansichten eines weiteren Beispiels, bei welchem ein erfindungsgemäßes Adapterelement in z-Richtung verschiebbar in eine Durchgangsöffnung des Pfostens
- Fig. 9: eingesetzt ist, das Beispiel der Figur 4 aus einem anderen Blickwinkel betrachtet,
- Fig. 10: eine Aufsicht auf einen Pfosten, in dessen Durchgangsöffnung zwei Adapterelemente, wie zuvor in den Figuren 4 und 9 vorgestellt, eingesteckt sind, wobei links und rechts des Pfostens ein jeweiliger Riegel von den beiden Adapterelementen gehalten ist,
- Fig. 11 bis 13: das Einsetzen des bereits in Figur 1 gezeigten flächigen Adapterelements in die zugehörige Durchgangsöffnung des zugehörigen Pfostens,
- Fig. 14: schematische Bestandteile einer erfindungsgemäßen Tragkonstruktion, wobei die Position der Adapterelemente nur angedeutet aber diese nicht im Detail gezeigt sind, und
- Fig. 15: ein Beispiel eines erfindungsgemäßen Adapterelements (links von oben gesehen in Längsrichtung des Pfostens sowie rechts in perspektivischer Ansicht), welches außenseitig um einen Pfosten herumgeführt ist, um so zu beiden Seiten des Pfostens Halteflächen auszubilden und
- Fig. 16: eine Seitenansicht auf ein aufrecht stehendes bifaziales PV-Modul, welches in einem Montagefeld einer erfindungsgemäßen Tragkonstruktion angeordnet ist, und die
- Fig. 17 bis Fig. 26: jeweilige schematische Aufsichten auf erfindungsgemäße Tragkonstruktionen aus einem jeweiligen Pfosten und zwei daran mittels Adapterelemente befestigter Riegel.

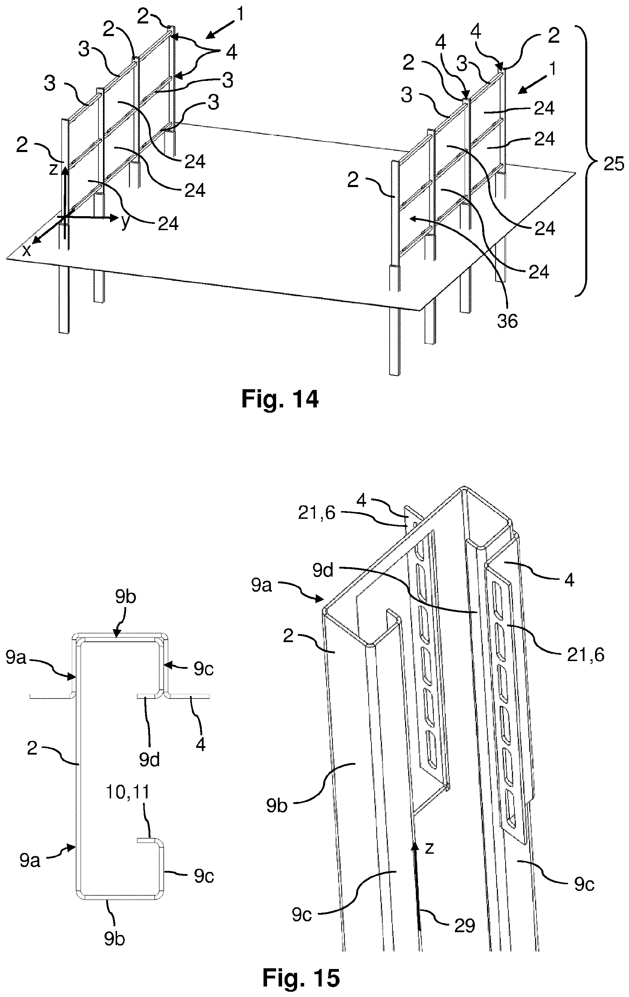

Die Figur 14 illustriert schematisch die Bestandteile einer erfindungsgemäßen Photovoltaik-Anlage 25 mit einer Tragkonstruktion 1, an welcher mehrere aufrechtstehende bifaziale Photovoltaik-Module 24 angeordnet sind. Die Tragkonstruktion 1 umfasst mehrere Pfosten 2, die im Erdreich befestigt sind, wobei an den Pfosten 2 Riegel 3 befestigt sind, die jeweils zwei benachbarte Pfosten 2 miteinander verbinden und horizontal verlaufen. Die Verbindung zwischen dem Ende des jeweiligen Riegels 3 und dem zugehörigen Pfosten 2 ist dabei jeweils mittels wenigstens eines separaten Adapterelements 4 hergestellt.

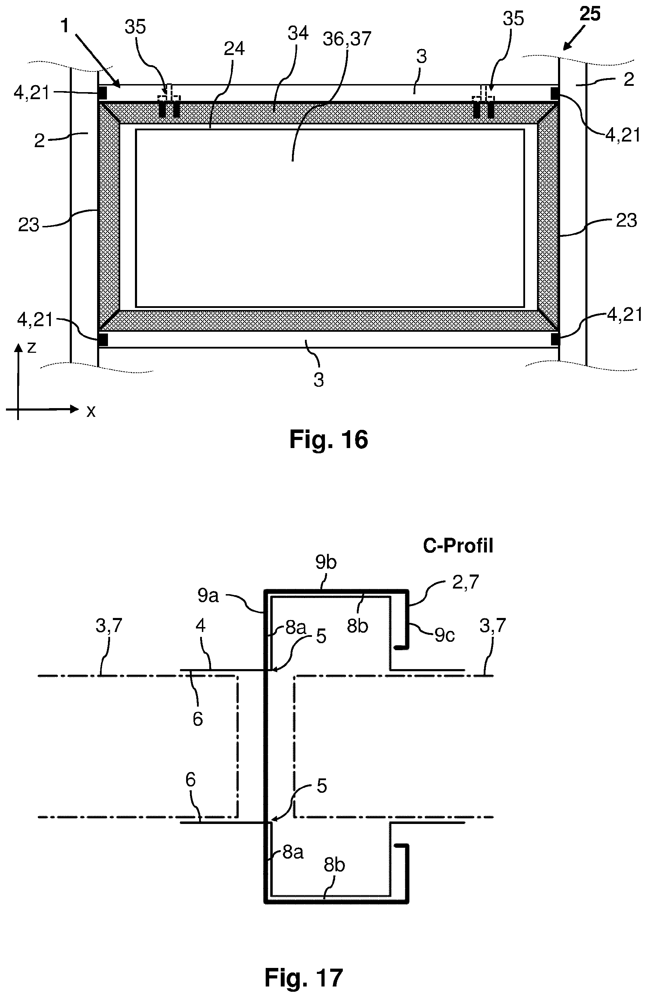

In Figur 16 ist eine denkbar einfache Ausgestaltung einer solchen Tragkonstruktion 1 zu sehen, wobei in dem Montagefeld, welches durch die beiden Riegel 3 und die beiden Pfosten 2 gebildet ist, ein gerahmtes PV-Modul 24 montiert ist. Hierzu ist der Modulrahmen 34 des PV-Moduls 24 mittels separater Befestigungselemente 35 an dem oberen Riegel 3 befestigt. Die Riegel 3 sind ihrerseits an ihren jeweiligen Enden mittels jeweiliger erfindungsgemäßer Adapterelemente 4 an dem jeweiligen zugehörigen Pfosten 2 befestigt.

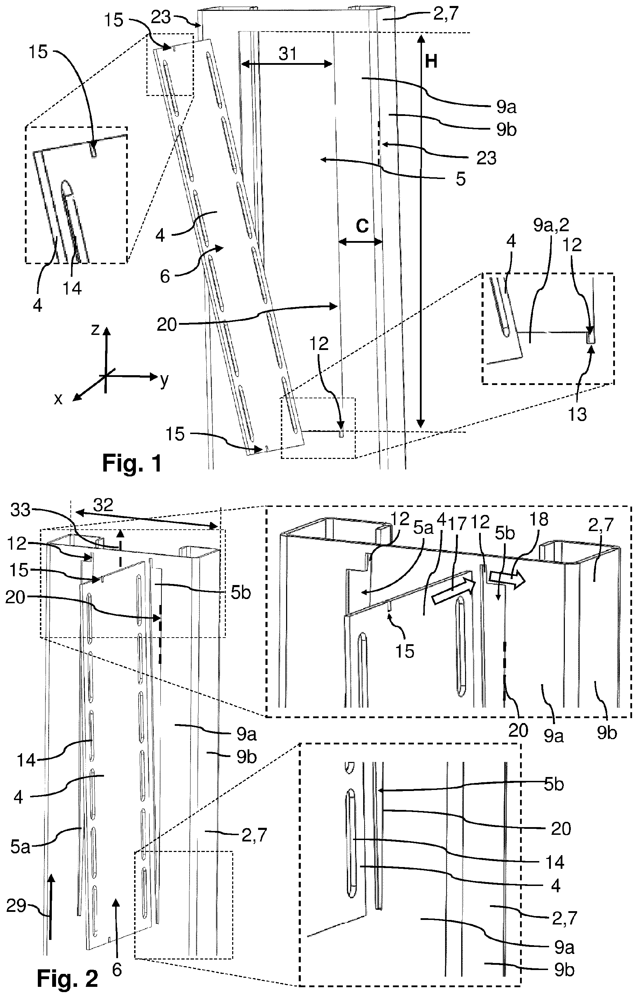

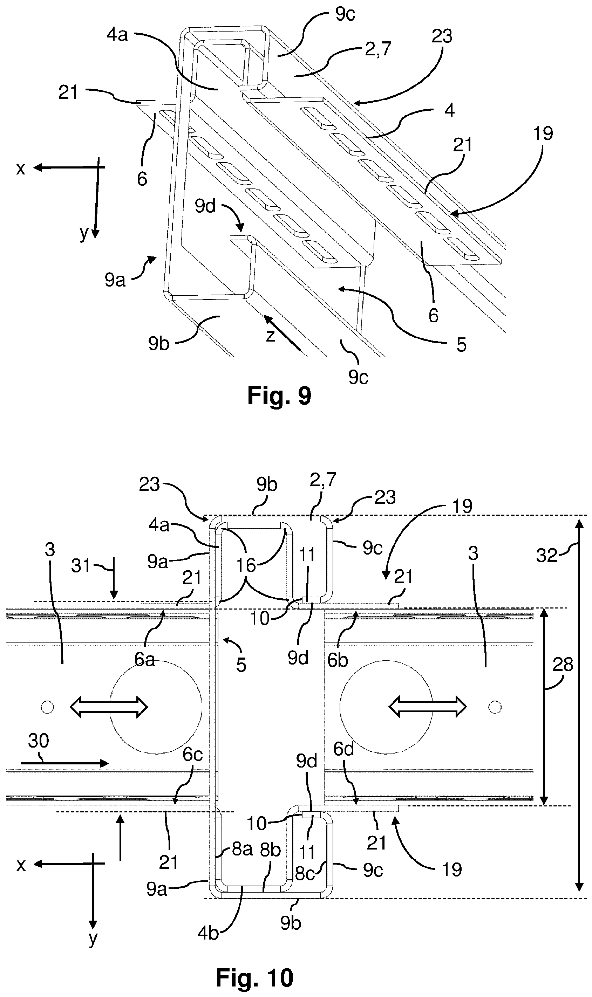

Die Figur 1 zeigt eine erste erfindungsgemäße Möglichkeit, wie ein solches Adapterelement 4 und der zugehörige Pfosten 2 ausgebildet sein kann: Der Pfosten 2 weist in seiner Außenfläche 9a (modulseitige Außenfläche), die dem zugehörigen Riegel 3 und damit dem daran montierten PV-Modul 24 zugewandt ist, eine Durchgangsöffnung 5 auf mit einer Breite 31, die größer ausfällt als die Breite 28 des zugehörigen Riegels 3 quer zu seiner Längsrichtung 30 (vgl. dazu die Figur 10). Wie zu erkennen ist, ist das zugehörige Adapterelement 4 flächig und frei von Biegungen in Form einer Metallplatte ausgebildet. An den oberen und unteren Kanten der Metallplatte sind dabei jeweilige rechteckige Ausnehmungen 15 ausgebildet.

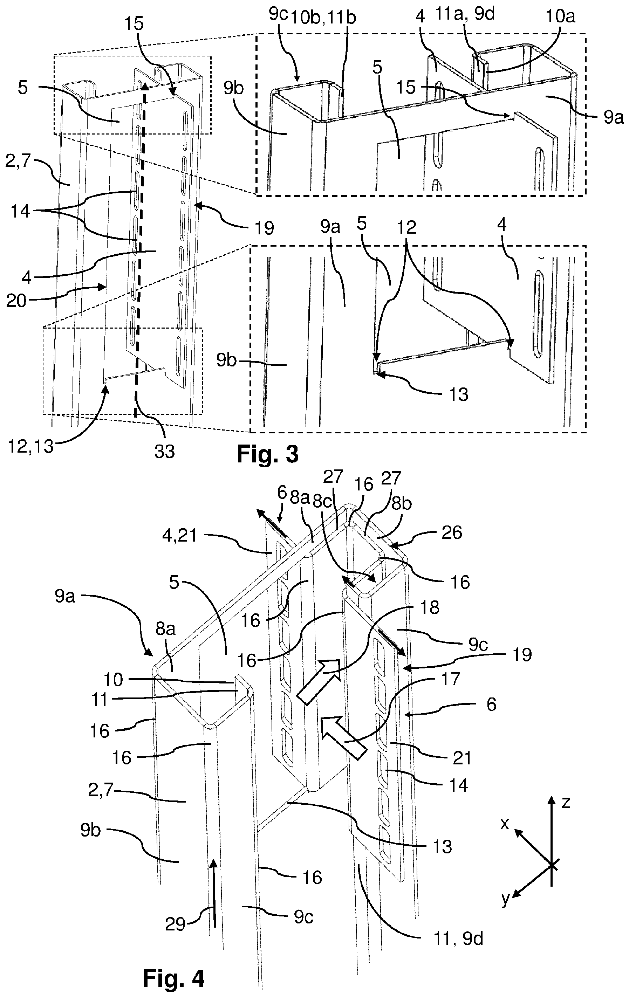

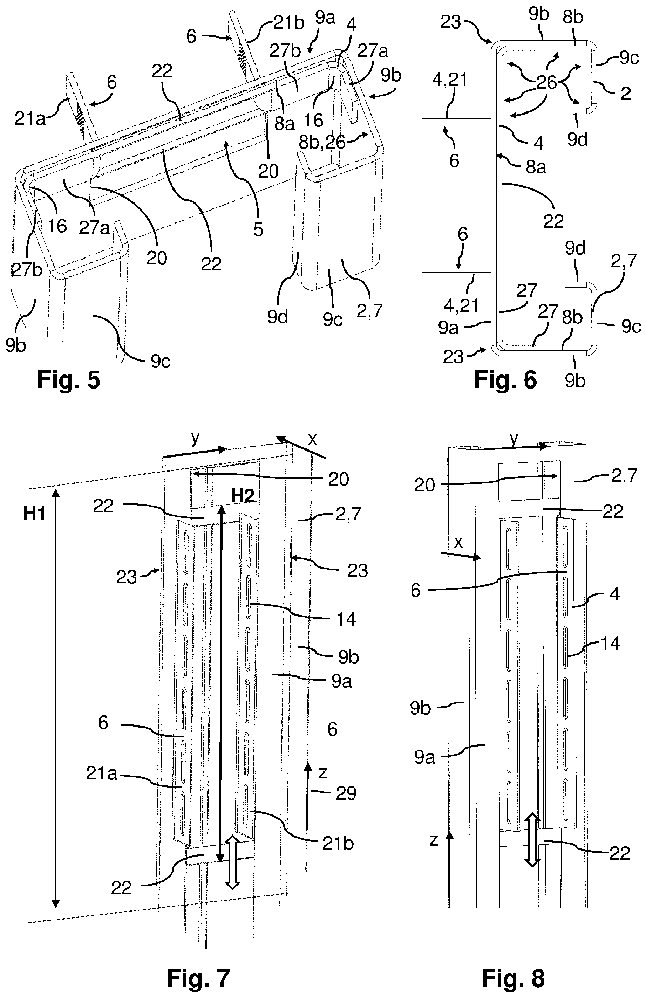

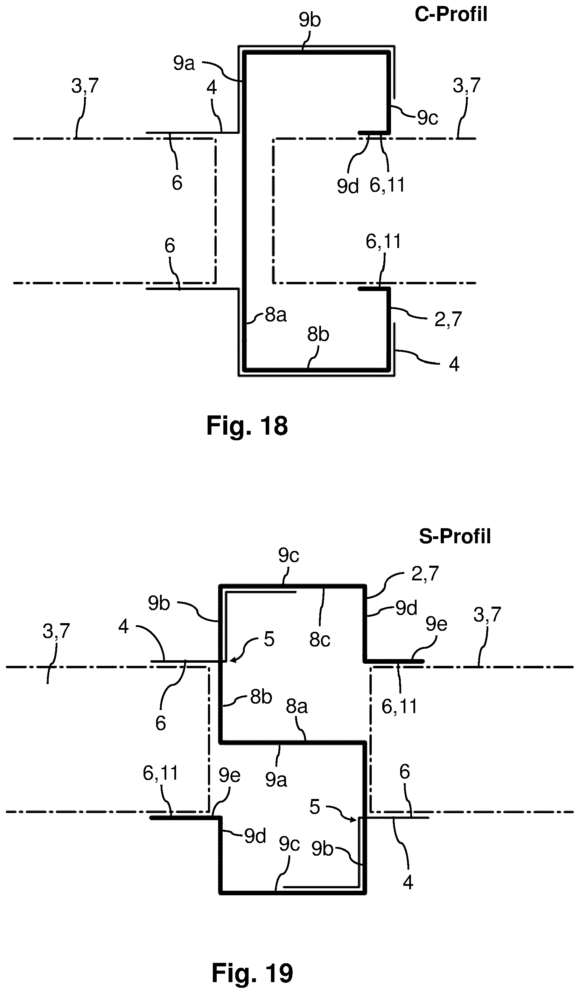

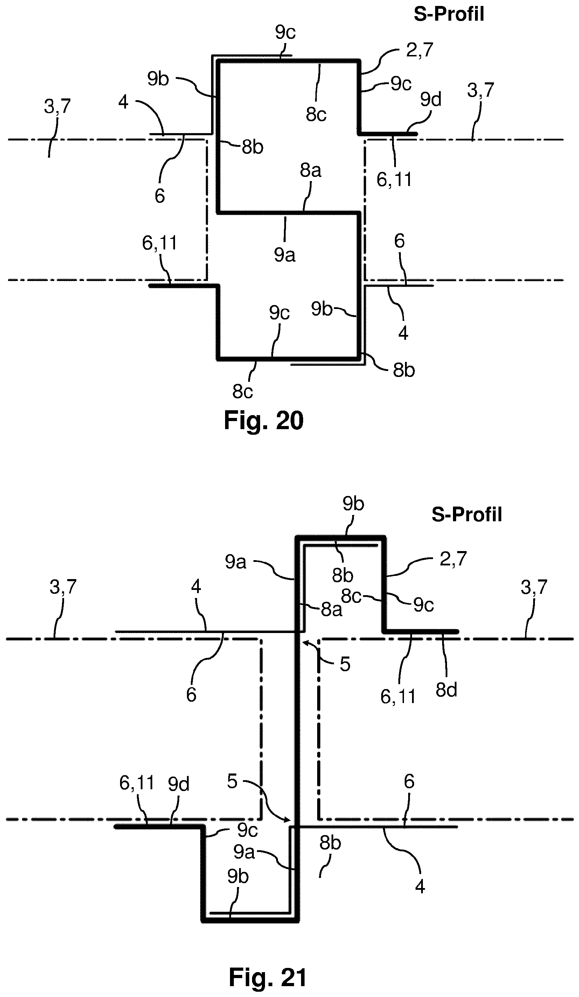

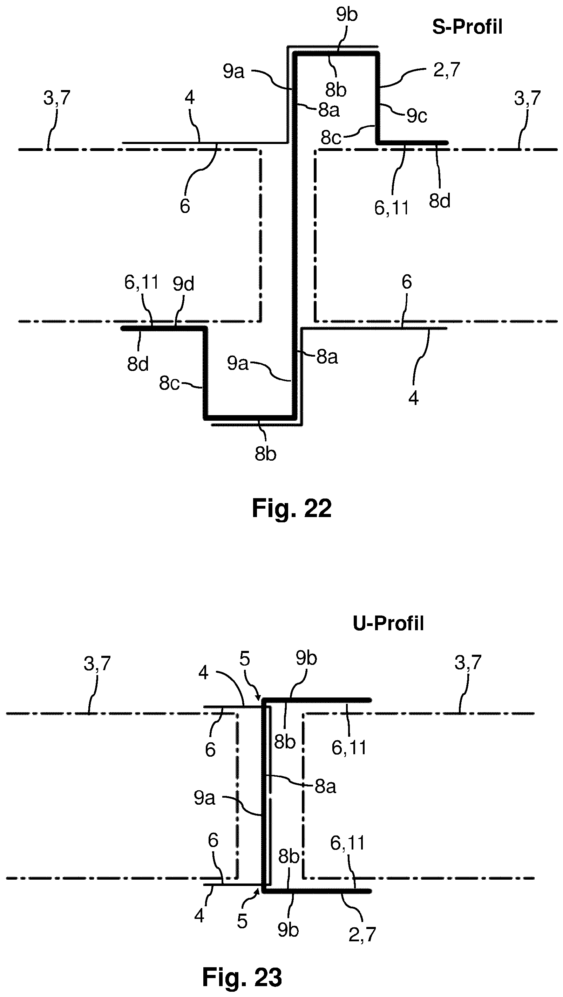

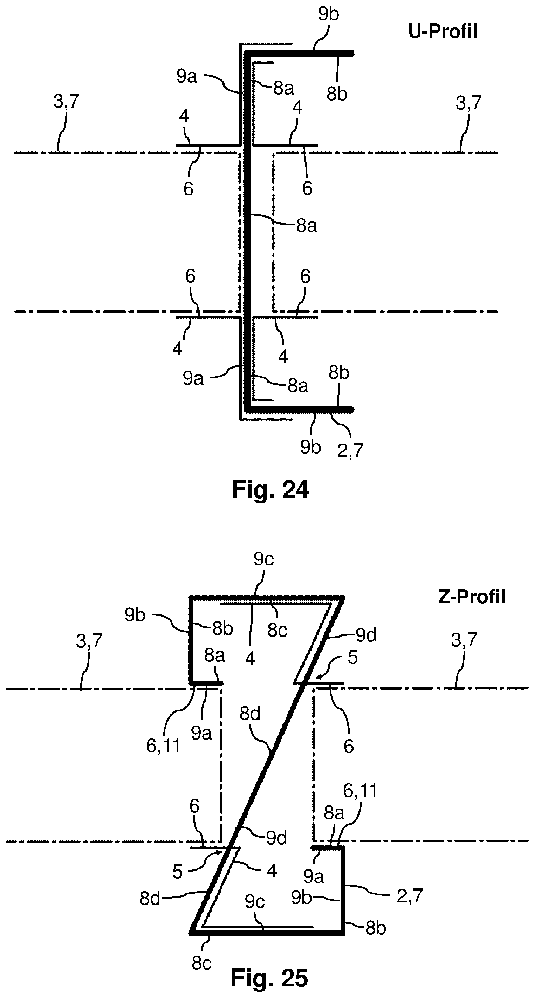

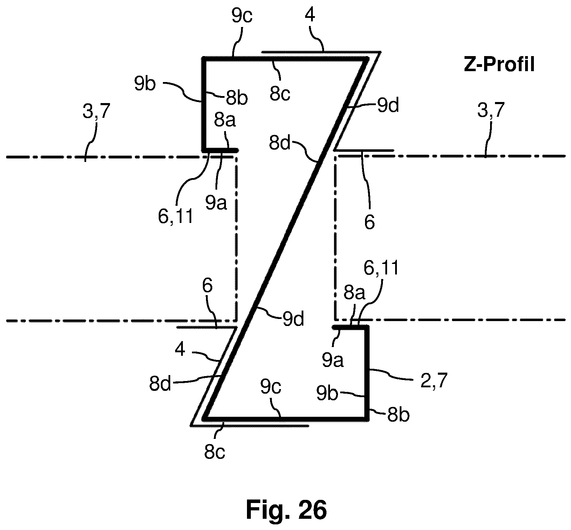

Bei allen Ausgestaltungen gemäß den Figuren ist das jeweilige Adapterelement 4 flächig an wenigstens zwei Flächen des zugehörigen Pfostens 2 abgestützt, wobei diese Flächen in unterschiedlichen Richtungen jeweils quer zu einer Längsachse 29 (= vertikale z-Richtung) des Pfostens 2 verlaufen, sodass durch Windlasten verursachte Momente effektiv von dem Adapterelement 4 in den Pfosten 2 abgeleitet werden können. Im Falle der Figuren 1-3 sind die beiden Abstützflächen des Pfostens 2 dabei die Fläche, die im Bereich der Anlagekante 20 von dem Pfosten 2 ausgebildet ist (diese Schnittfläche begrenzt die Durchgangsöffnung 5) sowie die Außenfläche 9d, die durch den Flansch 11 am Ende des Längsprofils 7 des Pfostens 2 ausgebildet wird. An beiden dieser Flächen liegt das Adapterelement 4 flächig an. Im Falle der Figuren 4, 9 und 10 sind die wenigstens zwei Abstützflächen die Innenflächen 8a und 8b sowie die Außenfläche 9d des dortigen Pfostens 2. Im Falle der Figuren 5 bis 8 sind die zwei Abstützflächen die Innenflächen 8a und 8b des dortigen Pfostens 2 und im Falle der Figur 15 die Außenflächen 9a und 9b des dortigen Pfostens 2 (zwischen der Außenfläche 9c und dem Adapterelement 4 kann aufgrund von Fertigungstoleranzen ein Luftspalt bestehen). Im Falle der Figur 17 sind die wenigstens zwei Abstützflächen die Innenflächen 8a und 8b; im Falle der Figur 18 die Außenflächen 9a, 9b; bei Figur 19: die Innenflächen 8b, 8c sowie die Außenflächen 9b, 9c; bei Figur 20: die Außenflächen 9b, 9c für das obere Adapterelement 4 und die (auf der gegenüberliegenden Seite des S-Profils 7 liegenden) Innenflächen 8b und 8c für das untere Adapterelement 4; bei Figur 21, Figur 22 und Figur 24: Außenflächen 9a, 9b und Innenflächen 8a, 8b; bei Figur 23: die Innenfläche 8a und die jeweilige Seitenwandfläche, die die Durchgangsöffnung 5 in dem U-Profil 7 begrenzt (ähnlich wie bei Figur 3); und schließlich bei Figur 25 und Figur 26: die Außenflächen 9c, 9d und die Innenflächen 8c, 8d.

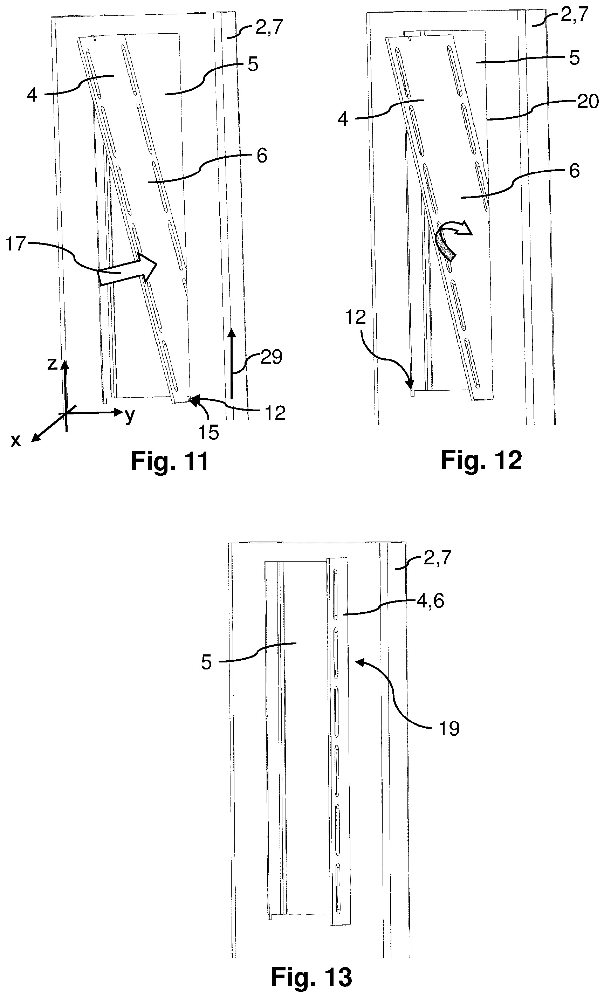

Die Figuren 11 bis 13 zeigen, wie das dortige ohne Biegungen als Flachstück ausgebildete Adapterelement 4 an dem Pfosten 2 montiert wird und dabei bereits vor der finalen Verschraubung mit dem jeweiligen Riegel 3 bereits drehgesichert und verschiebefest in der Durchgangsöffnung 5 des Pfostens 2 gehalten wird. Hierzu wird das Adapterelement 4 in die Durchgangsöffnung 5 eingesteckt, was bei diesem Ausführungsbeispiel von beiden Seiten her möglich ist.

Wie die Figur 11 zeigt, wird dazu das Adapterelement 4 zunächst in schräger Orientierung in Bezug auf die in z-Richtung verlaufende Längsachse 29 des Pfostens 2 entlang der gezeigten Einsteckrichtung 17 (in der Figur 11 also entgegen der X-Achse) in die Durchgangsöffnung 5 eingeführt. Dabei gelangt die an der unteren Kante des Adapterelements 4 ausgebildete Ausnehmung 15 in Eingriff mit der an der unteren Kante der Durchgangsöffnung 5 im Pfosten 2 ausgebildeten Ausnehmung 12, die auch in Figur 1 gut zu erkennen ist. Anschließend wird das Adapterelement 4 um eine Achse der Einsteckrichtung 17 (negative x-Richtung) im Uhrzeigersinn gedreht (vgl. den Blockpfeil in Figur 12), wobei dabei das Adapterelement 4 gleichzeitig auch entgegen der Längsrichtung 29 des Pfostens 2, also quer zur Einsteckrichtung 17 und in negativer z-Richtung nach unten verschoben wird, wodurch die Ausnehmung 15 und die Ausnehmung 12 vollständig miteinander in Eingriff geraten.

Nach vollständig durchgeführter Drehung und vollständig vollzogener Querbewegung liegt das Adapterelement 4 in der finalen Montageposition 19, die in Figur 13 gezeigt ist, erkennbar an einer Anlagekante 20 des Pfostens 2 an, die den rechten Rand der Durchgangsöffnung 5 begrenzt. Dabei liegt das Adapterelement 4 auf der Auflagefläche 13 des Pfostens 2 auf, die in Figur 1 illustriert ist (siehe dort das rechte Detail) und die am Boden der Ausnehmung 12 im Pfosten 2 ausgebildet ist. In der gezeigten finalen Montageposition 19 ist somit die z-Position des Adapterelements 4 relativ zum Pfosten 2 durch die Auflagefläche 13 vorgegeben und die y-Position des Adapterelements 4 relativ zum Pfosten 2 durch die Anlagekante 20, die in Figur 12 zu sehen ist.

Bei dem Beispiel der Figur 1 beträgt die Breite 31 der Durchgangsöffnung 5 weniger als 60 % der zugehörigen Breite 32 des Pfostens 2 (die beispielsweise in Figur 2 illustriert ist), sodass, sobald die beiden hierfür vorgesehenen Adapterelemente 4 in der in Figur 1 gezeigten Durchgangsöffnung 5 des Pfostens 2 links und rechts jeweils an den Anlagekanten 20 montiert sind, diese beiden Adapterelemente 4 einen Riegel 3 beidseitig fassen können, dessen Breite 28 somit wesentlich schmaler (mehr als 20% schmaler) ausfällt als die Breite 32 des zugehörigen Pfostens 2. Dies ist günstig, um die vorder- und rückseitige Verschattung der PV-Module 24 zu minimieren, aber gleichzeitig eine hohe Stabilität des Pfostens 2 zu gewährleisten. Aus demselben Grund ist auch die Durchgangsöffnung 5 mittig zu den für die Verschattung relevanten Außenkanten 23 des Pfostens 2 angeordnet. Anders ausgedrückt, ist die Durchgangsöffnung 5 mittig positioniert in Bezug auf die Breite 32 des Pfostens 2 quer zur Längsrichtung 29 des Pfostens 2 und quer zur Längsrichtung 30 des zugehörigen Riegels 3. Würden hingegen monofaziale PV-Module verwendet (bei gleichzeitiger Ausrichtung der Vorderseite der einzigen aktiven Fläche des jeweiligen PV-Moduls zur Sonne), so könnte auch eine außermittige Anordnung der Riegel / Durchgangsöffnungen genutzt werden, um die Verschattung weiter zu minimieren. Denn in einem solchen Fall macht es Sinn, die aktiven Flächen möglichst nahe an die Außenflächen der Pfosten heranzurücken, auf die die Sonnenstrahlung einfällt.

Die Figur 2 zeigt ein zweites mögliches Ausgestaltungsbeispiel, wobei hier zwei vergleichsweise schmale und schlitzförmige Durchgangsöffnungen 5a und 5b in der Außenfläche 9a des Pfostens 2 ausgebildet sind. Auch bei diesem Beispiel ist das Adapterelement 4 wieder flächig ausgebildet und kann in die zugehörige Durchgangsöffnung 5 eingesteckt werden. Anders als bei dem Beispiel der Figur 1, wo in die dortige Durchgangsöffnung 5 zwei Adapterelemente 4 eingesteckt werden können, die dann links und rechts an der jeweiligen Anlagekante 20 des Pfostens 2 anliegen, die die gezeigte Durchgangsöffnung 5 begrenzt, ist bei dem Beispiel der Figur 2 vorgesehen, dass nur ein Adapterelement 4 in die jeweilige Durchgangsöffnung 5a/5b eingesetzt wird.

Bei dem Beispiel der Figur 2 ist dabei jeweils der Öffnungsquerschnitt der Durchgangsöffnung 5a und 5b kleiner gewählt als ein Querschnitt des zugehörigen Riegels 3, der an den Adapterelementen 4 montiert werden soll. Daher ist der Riegel 3 auch nicht in die jeweilige Durchgangsöffnung 5a oder 5b einführbar. Wie bei dem Beispiel der Figur 1 wird aber auch hier das jeweilige Adapterelement 4 zunächst entgegen der x-Richtung entlang der gezeigten Einsteckrichtung 17 in die Durchgangsöffnung 5 eingesteckt und zwar bis zu einer Tiefe, die der Position der am oberen Rand des Adapterelements 4 erkennbaren Ausnehmung 15 entspricht. Anschließend kann dann das Adapterelement 4 quer zur Einsteckrichtung 17 in der gezeigten Verschieberichtung 18 (in Figur 2 entlang der y-Achse) bis in die finale Montageposition 19 verschoben werden. In der finalen Montageposition 19 liegt das Adapterelement 4 der Figur 2 dabei erneut an einer in Längsrichtung 29 des Pfostens 2 verlaufenden Anlagekante 20 des Pfostens 2 an, wobei die Anlagekante 20 die gezeigte Durchgangsöffnung 5b lateral auf der rechten Seite begrenzt (Die Anlagekante 20 wird vom Pfosten 2 ausgebildet).

Für das Beispiel der Figur 1 ist die finale Montageposition 19 in Figur 3 gezeigt, wobei man dort in der linken Abbildung erkennt, dass das Adapterelement 4 drehfest und verschiebefest mittels der im Pfosten 2 ausgebildeten Ausnehmungen 12 als auch der im Aufnahmeelement 4 selbst ausgebildeten Ausnehmungen 15 positioniert ist: die obere Ausnehmung 15 des Adapterelements steht dabei im Eingriff mit dem Pfosten 2 und legt die x-Position des Adapterelements 4 relativ zum Pfosten 2 fest; die untere Ausnehmung 12 im Pfosten 2 steht hingegen in Eingriff mit dem Adapterelement 4 und legt somit die y-Position des Adapterelements 4 relativ zum Pfosten 2 fest. Hierbei liegt das Adapterelement 4 auch an der gezeigten Außenfläche 9d des Pfostens 2 flächig an. Der Pfosten 2 ist bei allen Beispielen der Figuren 1-13 erkennbar mittels eines Längsprofils 7 ausgebildet, welches einen C-förmigen Querschnitt aufweist. Hierbei sind die beiden Enden 10a und 10b des Längsprofils 7 umgebogen und bilden so einen jeweiligen Flansch 11a, 11b aus, der eine jeweilige Anlagefläche bietet für das flächige Anliegen des Adapterelements 4 an dem Flansch 11.

Bei den bisher vorgestellten Ausgestaltungsbeispielen ist das jeweilige Adapterelement 4 in seiner Höhe dabei so groß ausgestaltet, dass sogar zwei übereinanderliegende Riegel 3 an der jeweiligen Haltefläche 6, die von dem Adapterelement 4 bereitgestellt wird, montiert werden können. Hierbei sorgen die in den Adapterelementen 4 ausgestalteten Langlöcher 14 dafür, dass der jeweilige Riegel 3 in unterschiedlichen z-Höhen mit dem Adapterelement 4 mechanisch verbunden werden kann, beispielsweise über eine Verschraubung. Dadurch können beispielsweise Höhenschwankungen der Pfosten 2 und/oder Neigungen des Geländes ausgeglichen werden.

Die Figur 4 zeigt ein weiteres erfindungsgemäßes Beispiel, wobei erneut eine Durchgangsöffnung 5 in dem Pfosten 2 ausgebildet ist, der auch erneut (lediglich beispielhaft) mithilfe eines C-Längsprofils 7 ausgestaltet ist. Wie man in Figur 4 erkennt, zeigt das dortige Adapterelement 4 einen Querschnitt, der, aus der z-Richtung betrachtet, einem Omega ähnelt. Das Adapterelement 4 ist also nicht länger flächig ausgebildet, sondern weist insgesamt vier Biegungen 16 auf, die jeweils entlang der Längsrichtung 29 des Pfostens 2 verlaufen. Dadurch bietet das Adapterelement 4 mehrere Anlageflächen, mit denen es flächig an den gezeigten Innenflächen 8a, 8b aber auch an der Außenfläche 9d des Längsprofils 7 des Pfostens 2 flächig anliegt. Das Adapterelement 4 ist dabei in die Durchgangsöffnung 5 erkennbar von innen nach außen eingesteckt, da es mit seiner Schulter auf die Innenfläche 8a des Pfostens 2 stößt und dort flächig anliegt.

Die Montage des Adapterelements 4 an dem Pfosten 2 der Figur 4 erfolgt dabei erneut dadurch, dass zunächst das Adapterelement 4 in die Durchgangsöffnung 5 entlang der gezeigten Einsteckrichtung 17 eingesteckt wird. Die in Figur 4 illustrierte finale Montageposition 19 wird aber erst durch ein Verschieben des Adapterelements 4 quer zur Einsteckrichtung 17 in der gezeigten Verschieberichtung 18 erreicht, während das Adapterelement 4 bereits in die Durchgangsöffnung 5 eingesteckt ist. In der finalen Montageposition 19 liegt das Adapterelement 4 somit an einer Anlagekante 20 des Pfostens 2 an, die die Durchgangsöffnung 5 lateral begrenzt. Zudem liegt die rechte Lasche 21, die von dem Adapterelement 4 ausgebildet wird und eine Haltefläche 6 zum Halten des zugehörigen Riegels 3 zur Verfügung stellt, an dem Flansch 11 des C-Profils 7 flächig an.

Bei dem Beispiel der Figur 4 ist das Adapterelement 4 somit erkennbar an einer Innenkontur 26 des Längsprofils 7 entlang geführt und dabei flächig an dem Längsprofils 7 abgestützt, nämlich an den Flächen 8a, 8b und 9d. Dies erkennt man auch nochmals gut in den Figuren 9 und 10, die ebenfalls die finale Montageposition 19 des bereits aus Figur 4 vorbekannten Adapterelements 4 an demselben Pfosten 2 zeigen. Gerade in Figur 10 erkennt man dabei gut die flächige Abstützung des Adapterelements 4 an der Innenseite des Längsprofils 7, genauer an den Innenflächen 8a und 8b.

Wie in Figur 4 illustriert ist, bildet das Adapterelement 4 somit zwei Anlageschenkel 27 aus, die jeweils an zwei Innenflächen 8a beziehungsweise 8b des Längsprofils 7 flächig abgestützt sind. Diese beiden Innenflächen 8a und 8b verlaufen dabei in unterschiedlichen Richtungen jeweils quer zu der in Figur 4 illustrierten Längsachse 29 des Pfostens 2. Dadurch können sowohl Längs- als auch Querkräfte, die auf den Riegel 3 einwirken, sicher in den Pfosten 2 abgeleitet werden.

Das in den Figuren 4, 9 und 10 gezeigte Adapterelement 4 bildet erkennbar zu beiden Seiten des Pfostens 2, also bezogen auf die in Figur 10 illustrierte Längsrichtung 30 des zugehörigen Riegels 3, wenigstens eine Haltefläche 6 zum Halten eines der Riegel 3 aus. Wie man in Figur 10 erkennt, stehen die beiden Halteflächen 6a und 6b des oberen Adapterelements 4a in Längsrichtung 30 des zugehörigen Riegels 3 über den Pfosten 2 hinaus und fluchten zudem miteinander. Die jeweilige Halteflächen 6a und 6b werden dabei (jeweils) von einer jeweiligen Lasche 21 des Adapterelements 4 bereitgestellt. In Figur 10 kann der linke Riegel 3 dabei mehr oder weniger tief in die Durchgangsöffnung 5 eingeführt werden; dies ist aber nicht zwingend notwendig, weil bereits die Laschen 21 eine gewisse Längsverstellbarkeit des Riegels 3 in der x-Richtung erlauben (dies gilt auch für die beiden Laschen 21 auf der rechten Seite des Adapterelements 4).

Die Figur 5 zeigt eine weitere mögliche Ausgestaltung eines erfindungsgemäßen Adapterelements 4, welches in eine Durchgangsöffnung 5 eines zugehörigen Pfostens 2 von innen nach außen eingesteckt ist. Dieses Adapterelement bildet zwei Anlageschenkel 27a und 27b aus, die flächig an den gezeigten Innenflächen des Längsprofils 7 des Pfostens 2 anliegen. Im Unterschied etwa zu dem Beispiel der Figur 10 stellt aber bereits dieses Adapterelement 4 der Figur 5 zwei Laschen 21 zur Verfügung, die dazu vorgesehen sind, einen Riegel 3 beidseitig zu fassen. Das in Figur 5 gezeigte Adapterelement 4 bildet somit eine linke und eine rechte Lasche 21 aus, die jeweilige Halteflächen 6 aufweisen, die zum paarweise Halten des zugehörigen Riegels 3 vorgesehen sind. Hierbei sind die beiden Laschen 21a und 21b über zwei von dem Adapterelement 4 ausgebildete Brücken 22 miteinander verbunden und liegen außenseitig jeweils an einer Anlagekante 20 des Pfostens 2 an, die die Durchgangsöffnung 5 begrenzt.

In der Figur 6, die eine Draufsicht auf die Situation der Figur 5 zeigt, ist die obere Brücke 22 gut zu erkennen, ebenso wie die Tatsache, dass das gezeigte Adapterelement 4 flächig an zwei Innenflächen 8b des Längsprofils 7 des Pfostens 2 anliegt, die sich gegenüberliegen.

Die Figuren 7 und 8 zeigen ein Adapterelement 4, das ähnlich wie das der Figur 5 ausgestaltet ist und somit jeweils zwei Laschen 21a und 21b ausbildet, die zum paarweise Halten des zugehörigen Riegels 3 vorgesehen sind. Wie bereits bei dem Beispiel der Figur 5 ist auch bei dem Beispiel der Figuren 7 und 8 die Höhe H1 der Durchgangsöffnung 5 sehr viel größer gewählt als die Höhe H2 des Adapterelements 4 in z-Richtung. Dadurch kann erreicht werden, dass das Adapterelement 4, noch vor der finalen Befestigung an dem zugehörigen Pfosten 2, stufenlos entlang der gezeigten Längsrichtung 29 des zugehörigen Pfostens 2 verschoben werden kann, um so die z-Position des Adapterelements 4 relativ zum Pfosten 2 festzulegen beziehungsweise einzustellen. Dadurch kann ein z-Verstellbereich erzielt sein, der noch länger ausfällt als die Gesamthöhe der gezeigten Langlöcher 14. Hierbei liegt das Adapterelement 4 innenseitig an der in Figur 6 illustrierten Innenkontur 26 des Pfostens 2 auf und zwar so, dass das Adapterelement 4 in der Längsrichtung 29 des Pfostens 2 verschiebbar ist. Nach der finalen Befestigung des Adapterelements am Pfosten trägt dieses dazu bei, den Pfosten mechanisch zu stabilisieren.

Bei einer solchen Ausgestaltung kann sogar vorgesehen sein, dass der jeweilige Pfosten aus zwei Längsprofilen zusammengesetzt ist, die gemeinsam die Durchgangsöffnung 5 ausbilden, wodurch Materialabfall bei der Fertigung eingespart werden kann. Wird der jeweilige Pfosten zweigeteilt ausgestaltet, so können vorzugsweise vergleichsweise breite Adapterelemente zum Einsatz kommen, um die tatsächliche resultierende Breite des zweigeteilten Pfostens entsprechend der dann höheren Windlasten mechanisch zu stabilisieren.

Anstatt einer Montage mittels einer Verschraubung des Adapterelements kann die feste Verbindung/Anbindung zwischen Pfosten und Adapterelement beispielsweise auch mittels einer Verrastung gebildet sein. Beispielsweise kann ein jeweiliger Einrast-Mechanismus ausgebildet sein, wobei hierzu das Adapterelement in im Pfosten gestanzte Laschen, die in z-Richtung verlaufen, eingerastet sein kann.

Die Figur 15 zeigt eine weitere erfindungsgemäße Ausgestaltung von möglicherweise eigenständiger erfinderischer Qualität: Hier ist das Adapterelement 4 außenseitig um den zugehörigen Pfosten 2 herumgeführt, wobei das Adapterelement 4 flächig an insgesamt drei Außenflächen 9a, 9b und 9c des Pfostens 2 abgestützt ist. Hierbei verlaufen beispielsweise die Außenflächen 9a und 9b in unterschiedlichen Richtungen jeweils quer zu der Längsachse 29 des Pfostens 2. Das Adapterelement 4 liegt hier also auf wenigstens zwei Außenflächen 9a und 9b des Pfostens 2 flächig auf, wobei beide Außenflächen 9a, 9b genutzt werden können, um das Adapterelement 4 mit dem Pfosten 2 zu verbinden, beispielsweise durch eine Verschraubung. Auch bei dem Beispiel der Figur 15 könnte das gezeigte Adapterelement 4 zu beiden Seiten des Pfostens 2 je einen zugehörigen Riegel 3 mittels einer jeweiligen Haltefläche 6 halten, da die beiden gezeigten Laschen 21, die die jeweilige Haltefläche 6 zur Verfügung stellen, zu beiden Seiten des Pfostens 3 angeordnet sind und zudem miteinander fluchten.

Die Figuren 17 bis 26 zeigen weitere mögliche Ausgestaltungen von erfindungsgemäßen Verbindungen zwischen einem Pfosten 2 und wenigstens einem zugehörigen Riegel 3 mittels wenigstens eines erfindungsgemäß ausgestaltetem Adapterelements 4. Hierbei werden (beispielhaft) C-, U-, Z- und S-Profile für den jeweiligen Pfosten 2 verwendet. Bei den Beispielen der Figuren 18, 20, 22, 24 und 26 sind keinerlei Durchgangsöffnungen 5 in dem Längsprofil 7 des jeweiligen Pfostens 2 ausgebildet, sondern die jeweiligen Adapterelemente 4 liegen flächig an wenigstens zwei Außenflächen 9 des Pfostens 2 an, die in unterschiedlichen Richtungen jeweils quer zur Längsachse des Pfostens 2 (= Blickrichtung der jeweiligen Figur) verlaufen. Bei den Beispielen der Figuren 17, 19, 21, 23 und 25 sind hingegen jeweils Durchgangsöffnungen 5 in dem Längsprofil 7 des Pfostens 2 ausgebildet, wobei jeweils ein Adapterelement 4 durch die jeweilige Durchgangsöffnung 5 eingesteckt und hindurch geführt ist. Bei allen diesen Ausgestaltungen bietet das jeweilige Adapterelement 4 dabei eine Haltefläche 6, die in Längsrichtung des zugehörigen Riegels 3 ausgerichtet ist und von dem Längsprofil 7 des Pfostens 2 absteht / hervorsteht.

Im Beispiel der Figur 17 bietet das jeweilige Adapterelement 4 jeweils beidseitig vom Pfosten 2 eine jeweilige Haltefläche 6, an der der jeweils zugehörige Riegel 3 flächig befestigt ist.

Im Beispiel der Figur 18 wird hingegen der rechte Riegel 3 mittels Halteflächen 6 an dem Pfosten 2 befestigt, die von dem Längsprofil 7 des Pfostens 2, genauer von Flanschen 11 am jeweiligen Ende des Längsprofils 7, ausgebildet sind.

Dies gilt auch für das Beispiel der Figur 19, allerdings sind hier die Flansche 11 des dortigen S-Profils 7, welches den Pfosten 2 ausbildet, zu beiden Seiten des Pfostens 2 (also nicht einseitig wie bei dem C-Profil 7 der Figur 18) ausgebildet. Entsprechend ist ein jeweiliges Adapterelement 4 links und recht durch eine jeweilige Durchgangsöffnung 5 in dem S-Profil 7 gesteckt, um jeweils eine zweite Haltefläche 6 zum (beidseitigen) Halten des zugehörigen Riegels 3 auszubilden.

Das Beispiel der Figur 20 folgt diesem Prinzip des Beispiels der Figur 19, mit dem Unterschied, dass hier die Adapterelemente 4 jeweils außenseitig an dem S-Profil 7 anliegen und keine Durchgangsöffnung 5 ausgebildet sind.

Das Beispiel der Figur 21 ist hingegen vergleichbar mit demjenigen der Figur 19: Auch hier sind wiederum links und rechts Durchgangsöffnungen 5 am S-Profil 7 des Pfostens 2 ausgebildet, in die jeweils ein Adapterelement 4 eingesteckt ist. Ebenso liegen die Adapterelemente in beiden Beispielen jeweils an gegenüberliegenden Flächen des jeweiligen S-Profils 7 flächig an (Fig. 19: 8b, 8c vs. 9b, 9c; Fig. 21: 8a, 8b vs. 9a, 9b). Das S-Profil 7 der Figur 19 weist aber insgesamt acht Biegungen auf, während das S-Profil der Figur 21 nur sechs Biegungen aufweist, was aber durch die größere Länge der Adapterelement 4 kompensiert wird.

Das Beispiel der Figur 22 ist analog zu demjenigen der Figur 21 ausgestaltet, aber mit dem Unterschied, dass die Adapterelemente 4 nur außenseitig an dem S-Profil 7 des Pfostens 2 flächig anliegen.

Bei dem U-Profil der Figur 23 kann der etwas größere Abstand zwischen den beiden Flanschen 11, im Vergleich zum Abstand der Halteflächen 6 der beiden Adapterelemente 4 durch Abstandshalter kompensiert werden, sodass beide Riegel 3 dieselbe Breite aufweisen können.

Die Figur 24 illustriert ein Beispiel eines U-Profils 7 als Pfosten 2, an welchem insgesamt vier Adapterelemente 4 vorgesehen sind, um zwei Riegel 3 jeweils paarweise mit Halteflächen 6 beidseitig zu fassen.

Das Z-Profil 7 der Figur 25 bietet wie die S-Profile der Figuren 19 bis 22 jeweils beidseitig einen Flansch 11, der eine Haltefläche 6 zum Halten des jeweiligen Riegels 3 zur Verfügung stellt. Die zwei noch benötigten Halteflächen 6 werden hingegen von einem jeweiligen Adapterelement 4 bereitgestellt, das in eine jeweilige Durchgangsöffnung 5 eingesteckt ist. Dies ist aber nicht zwingend notwendig, wie das Beispiel der Figur 26 zeigt, dass eine ähnlich stabile Konstruktion ermöglicht.

Zusammenfassend wird zur Vereinfachung der Montage, der hierfür herzustellenden Komponenten, aber auch zur Erhöhung der mechanischen Stabilität der Verbindung zwischen einem vertikal verlaufenden Pfosten 2 und einem horizontal verlaufenden Riegel 3 einer Tragkonstruktion 1 einer Photovoltaik-Anlage 25, insbesondere mit aufrecht stehend an der Tragkonstruktion 1 aufgehängten PV-Modulen 24, vorgeschlagen, die Verbindung zwischen dem jeweiligen Pfosten 2 und dem jeweiligen zugehörigen Riegel 3 mittels eines separaten Adapterelements 4 herzustellen, und dabei das Adapterelement 4 an wenigstens zwei einen Winkel zueinander bildenden Flächen des Pfostens 2 flächig abzustützen. Hierzu kann insbesondere vorgesehen sein, dass das Adapterelement 4 in eine in einer modulseitigen Außenfläche 9a des Pfostens 2 ausgebildete Durchgangsöffnung 5 eingesteckt ist, vorzugsweise von innen nach außen. Alternativ oder aber ergänzend kann das Adapterelement 4 dabei insbesondere flächig an wenigstens zwei Außenflächen 9b, 9c des Pfostens 2 abgestützt sein, die in unterschiedlichen Richtungen zu einer Längsachse 30 des zugehörigen Riegels 3 verlaufen. Es versteht sich, dass auch Ausgestaltungen mit und ohne Durchgangsöffnung 5 an einem Pfosten 2 kombiniert werden können.

### Bezugszeichenliste

- 1: Tragkonstruktion
- 2: Pfosten
- 3: Riegel
- 4: Adapterelement (zur Befestigung von 3 an 2)
- 5: Durchgangsöffnung
- 6: Haltefläche (an 4 zum Halten von 3)
- 7: Längsprofil
- 8: Innenfläche (von 7)
- 9: Außenfläche (von 7)
- 10: Ende (von 7)
- 11: Flansch (ausgebildet von 2/7)
- 12: Ausnehmung (in 2, zum Fixieren der Rotation von 4)
- 13: Auflagefläche (von 2 zum Fixieren der z-Position von 4)
- 14: Langloch
- 15: Ausnehmung (in 4, zum Fixieren der Rotation von 4)
- 16: Biegung (von 4)
- 17: Einsteckrichtung
- 18: Verschieberichtung
- 19: finale Montageposition
- 20: Anlagekante (von 2, begrenzt 5)
- 21: Laschen (von 4)
- 22: Brücke (verbindet 21)
- 23: (für die Verschattung relevante) Außenkante (von 2, beabstandet zu 20)
- 24: Photovoltaik-Modul
- 25: Photovoltaik-Anlage
- 26: Innenkontur (von 2/7)
- 27: Anlageschenkel (von 4 zur Anlage an 26)
- 28: Breite (von 3, quer zu 30)
- 29: Längsrichtung (von 2)
- 30: Längsrichtung (von 3)
- 31: Breite (von 5)
- 32: Breite (von 2, quer zu 29)
- 33: Mittelachse (von 2, verläuft in 29 und teilt 32 gleichmäßig auf)
- 34: Modulrahmen (umfasst 24, dient zur Montage an 2 und/oder 3)
- 35: Befestigungselement (zum Verbinden von 34 mit 3 und damit zur finalen Montage von 24 an 3)
- 36: Modulebene
- 37: aktive Fläche (von 24)

## Patentansprüche

1. **Tragkonstruktion (1)** für eine Photovoltaik-Anlage (25), die zum Tragen aufrecht stehender bifazialer Photovoltaik-Module (24) ausgestaltet ist,
- wobei die Tragkonstruktion (1) mehrere Pfosten (2) aufweist, die an oder im Erdreich befestigt und als Längsprofile (7) ausgestaltet sind,
- wobei an den Pfosten (2) Riegel (3) befestigt sind, die jeweils zwei benachbarte Pfosten (2) miteinander verbinden und die jeweils zwischen zwei der Pfosten (2) angeordnet sind, wobei:
- die Riegel (3) jeweils mittels wenigstens eines separaten Adapterelements (4) an einem der Pfosten (2) befestigt sind,
- die Adapterelemente (4) jeweils Halteflächen (6) ausbilden, die in Längsrichtung des zugehörigen Riegels (3) ausgerichtet sind, und
- jeder der Riegel (3) an seinem jeweiligen Ende von wenigstens einer solchen von einem Adapterelement (4) ausgebildeten Haltefläche (6) gehalten ist und **dadurch gekennzeichnet**
- **dass** das jeweilige Adapterelement (4) flächig an wenigstens zwei Abstützflächen (8a, 8b, 8c, 9a, 9b, 9c, 9d, 13, 20) des Pfostens (2) abgestützt ist, die in unterschiedlichen Richtungen jeweils quer zu einer Längsachse (29) des Pfostens (2) verlaufen, nämlich
an einer am Boden einer Ausnehmung (12) im Pfosten (2) ausgebildeten Auflagefläche (13) und an einem Flansch (11), der von einem umgebogenen Ende (10) des jeweiligen Längsprofils (7) ausgebildet ist, wobei das jeweilige Adapterelement (4) hierzu in eine jeweilige Durchgangsöffnung (5) im Pfosten (2) eingesteckt ist, oder
an zwei Innenflächen (8a, 8b) des Längsprofils (7) des Pfostens (2), sodass das Adapterelement (4) einer Innenkontur (26) des Längsprofils (7) folgt, wobei das jeweilige Adapterelement (4) hierzu in eine jeweilige Durchgangsöffnung (5) im Pfosten (2) eingesteckt ist, oder
an zwei Außenflächen (9a, 9b) des Längsprofils (7) des Pfostens (2), sodass das Adapterelement (4) einer Außenkontur des Längsprofils (7) folgt.

2. Tragkonstruktion (1) nach Anspruch 1,
- wobei wenigstens ein Anlageschenkel (27) des Adapterelements (4) an einer Innenkontur (26) des Längsprofils (7) flächig anliegt,
- besonders bevorzugt wobei das Adapterelement (4) wenigstens zwei Anlageschenkel (27) ausbildet, die jeweils an zwei Innenflächen (8a, 8b, 8c) des Längsprofils (7) flächig abgestützt sind, vorzugsweise wobei die zwei Innenflächen (8a, 8b, 8c) in unterschiedlichen Richtungen jeweils quer zu einer Längsachse (29) des Pfostens (2) verlaufen und/oder wobei eine der Innenflächen (8a, 8c) quer zu einer Einsteckrichtung (17) verläuft, in welcher das Adapterelement (4) in die Durchgangsöffnung (5) einsteckbar ist.

3. Tragkonstruktion (1) nach einem der vorhergehenden Ansprüche, wobei ein Öffnungsquerschnitt der Durchgangsöffnung (5) kleiner gewählt ist als ein Querschnitt des zugehörigen Riegels (3), insbesondere sodass der Riegel (3) nicht in die Durchgangsöffnung (5) einführbar ist.

4. Tragkonstruktion (1) nach einem der vorhergehenden Ansprüche, wobei eine Breite (31) der Durchgangsöffnung (5) quer zu einer Längsrichtung (29) des Pfostens (2) höchstens 80%, vorzugsweise höchstens 60%, einer zugehörigen Breite (32) des Pfostens (2) beträgt, oder
- wobei jeweilige Anlagekanten (20a, 20b) des Pfostens (2), die eine jeweilige zugehörige Durchgangsöffnung (5a, 5b) lateral nach außen begrenzen, einen Abstand quer zur Längsrichtung (29) des Pfostens (2) aufweisen, der höchstens 80%, vorzugsweise höchstens 60%, einer zugehörigen Breite des Pfostens (2) beträgt,
- insbesondere sodass die in der jeweiligen Durchgangsöffnung (5) eingesteckten Adapterelemente (4) jeweils Riegel (3) fassen können, deren Breite weniger als 80%, insbesondere weniger als 60%, der Breite des zugehörigen Pfostens (2) beträgt.

5. Tragkonstruktion (1) nach einem der vorhergehenden Ansprüche, wobei in einzelne der Durchgangsöffnungen (5) des jeweiligen Pfostens (2) jeweils nur ein Adapterelement (4) eingesteckt ist,
- insbesondere wobei die Adapterelemente (4) flächig, insbesondere frei von Biegungen, ausgestaltet sind und/oder
- insbesondere wobei die jeweilige Durchgangsöffnung (5) dabei eine Breite (31) aufweist, die kleiner, vorzugsweise 2x oder sogar 4x kleiner, ausfällt, als eine Breite (28) des zugehörigen Riegels (3) und/oder
- wobei die jeweilige Durchgangsöffnung (5) ein Aspektverhältnis von in Längsrichtung (29) des Pfostens (2) gemessener Höhe zu Breite von größer 5:1 zeigt, und/oder
- wobei zwei zusammenwirkende Durchgangsöffnungen (5a, 5b), in die jeweils nur ein Adapterelement (4) eingesteckt ist, symmetrisch zueinander positioniert sind in Bezug auf eine in Längsrichtung (29) des Pfostens verlaufende Mittelachse (33) des Pfostens (2).

6. Tragkonstruktion (1) nach einem der vorhergehenden Ansprüche, wobei in einzelne der Durchgangsöffnungen (5) je mindestens zwei Adapterelemente (4a, 4b) eingesteckt sind,
- und/oder wobei die jeweilige Durchgangsöffnung (5) eine Breite (31) aufweist, die einer Breite (28) eines zugehörigen Riegels (3) entspricht, insbesondere diese Breite (28) übersteigt, und/oder
- wobei die jeweilige Durchgangsöffnung (5) mittig positioniert ist in Bezug auf eine Breite (32) des zugehörigen Pfostens (2) quer zu einer Längsrichtung (30) des zugehörigen Riegels (3) und quer zu einer Längsrichtung (29) des zugehörigen Pfostens (2).

7. Tragkonstruktion (1) nach einem der vorhergehenden Ansprüche, wobei das jeweilige Adapterelement (4),
- vorzugsweise mittels einer schlitzförmigen Ausnehmung (12) im Pfosten (2) und/oder
- mittels einer schlitzförmigen Ausnehmung (15) im Adapterelement (4) selbst,
verdrehsicher und/oder in wenigstens zwei Richtungen verschiebefest in der Durchgangsöffnung (5) gehalten ist.

8. Tragkonstruktion (1) nach einem der vorhergehenden Ansprüche, wobei das jeweilige Adapterelement (4)
- auf einer, insbesondere quer oder schräg zur Längsrichtung (29) des Pfostens (2) verlaufenden, Auflagefläche (13) des zugehörigen Pfostens (2) aufliegt und/oder
- an einer, vorzugsweise in Längsrichtung (29) des Pfostens (2) verlaufenden, Anlagekante (20) des Pfostens (2) anliegt,
sobald es vollständig in die Durchgangsöffnung (5) eingesteckt ist,
- insbesondere sodass eine z-Position des Adapterelements (4) relativ zum Pfosten (2) durch die Auflagefläche (13) vorgegeben ist und/oder sodass eine y-Position des Adapterelements (4) relativ zum Pfosten (2) durch die Anlagekante (20) vorgegeben ist.

9. Tragkonstruktion (1) nach einem der vorhergehenden Ansprüche, wobei das jeweilige Adapterelement (4) zu beiden Seiten des Pfostens (2), an welchem das Adapterelement (4) montiert ist, bezogen auf eine Längsrichtung (30) der Riegel (3) wenigstens eine Haltefläche (6) zum Halten eines der Riegel (3) ausbildet,
- vorzugsweise wobei die jeweiligen Halteflächen (6) des Adapterelements (4) in Längsrichtung (30) des zugehörigen Riegels (3) über den Pfosten (2) hinaus stehen und/oder
- wobei zwei Halteflächen (6a,6b/6c,6d) des Adapterelements (4) links und rechts des Pfostens (2) miteinander fluchten.

10. Tragkonstruktion (1) nach einem der vorhergehenden Ansprüche, wobei das jeweilige Adapterelement (4) zwei Laschen (21a, 21b), insbesondere eine linke und eine rechte Lasche oder eine obere und eine untere Lasche, ausbildet, die jeweilige Halteflächen (6) aufweisen,
- insbesondere wobei die Halteflächen (6) zum paarweise Halten eines mit dem Adapterelement (4) befestigten Riegels (3) vorgesehen sind,
- vorzugsweise wobei die beiden Laschen (21a, 21b) über wenigstens eine von dem Adapterelement (4) ausgebildete Brücke (22) miteinander verbunden sind und/oder
- wobei die beiden Laschen (21) außenseitig jeweils an einer die Durchgangsöffnung (5) begrenzenden Anlagekante (20) des Pfostens (2) anliegen.

11. Tragkonstruktion (1) nach einem der vorhergehenden Ansprüche, wobei das jeweilige Adapterelement (4) in einer nicht-finalen Montageposition, also noch vor der finalen Befestigung an dem zugehörigen Pfosten (2), stufenlos entlang einer Längsrichtung (29) des zugehörigen Pfostens (2) verschoben werden kann, um so eine z-Position des Adapterelements (4) relativ zum Pfosten (2) festzulegen,
- insbesondere weil das Adapterelement (4) außenseitig auf einer Außenkontur des Pfostens (2) und/oder innenseitig auf einer Innenkontur (26) des Pfostens (2) in Längsrichtung (29) des Pfostens (2) verschiebbar aufliegt und/oder weil das Adapterelement (4) eine Höhe in Längsrichtung (29) des Pfostens (2) aufweist, die kleiner, vorzugsweise wenigstens 20% kleiner, ausfällt als eine Höhe der Durchgangsöffnung (5), in welcher das Adapterelement (4) eingesteckt ist.

12. Tragkonstruktion (1) nach einem der vorhergehenden Ansprüche, wobei das jeweilige Adapterelement (4) außenseitig um den jeweiligen Pfosten (2) herumgeführt ist, an welchem das Adapterelement (4) befestigt ist, und
- wobei das Adapterelement (4) flächig an wenigstens zwei Außenflächen (9a, 9b, 9c) des Pfostens (2) abgestützt ist, die in unterschiedlichen Richtungen jeweils quer zu einer Längsachse (29) des Pfostens (2) verlaufen.

13. Tragkonstruktion (1) nach dem vorhergehenden Anspruch, wobei das jeweilige Adapterelement (4) auf wenigstens zwei Außenflächen (9a, 9b) des zugehörigen Pfostens (2) aufliegt, vorzugsweise und an wenigstens einer dieser beiden Außenflächen (9a, 9b) befestigt ist oder
- wobei das Adapterelement (4) auf wenigstens drei Außenflächen (9a, 9b, 9c) des zugehörigen Pfostens (2) aufliegt, vorzugsweise und an wenigstens einer dieser drei Außenflächen (9a, 9b, 9c) befestigt ist,
- insbesondere wobei das Adapterelement (4) zu beiden Seiten des Pfostens (2) einen jeweiligen Riegel (3) mittels einer Haltefläche (6) hält,
vorzugsweise wobei die beiden Halteflächen (6) miteinander fluchten.

14. Tragkonstruktion (1) nach einem der vorhergehenden Ansprüche wobei das jeweilige Adapterelement (4) in zwei Durchgangsöffnungen (5) eingesteckt ist, die jeweils in dem Pfosten (2) ausgebildet sind, an welchem das Adapterelement (4) befestigt ist,
- insbesondere wobei das Adapterelement (4) hierzu einmal von außen nach innen und einmal von innen nach außen durch die jeweilige Durchgangsöffnung (5) geführt ist.

15. **Photovoltaik-Anlage (25)** mit mehreren, vorzugsweise bifazialen, Photovoltaik-Modulen (24), die aufrecht stehend an einer Tragkonstruktion (1) angeordnet sind, **dadurch gekennzeichnet,**
- **dass** die Tragkonstruktion (1) nach einem der vorhergehenden Ansprüche ausgestaltet ist,
- vorzugsweise wobei je zwei Pfosten (2) und zwei Riegel (3) der Tragkonstruktion (1) ein im Wesentlichen rechteckiges Montagefeld aufspannen, in dem wenigstens eines der Photovoltaik-Module (24) angeordnet ist.

16. **Verfahren zur Montage eines Adapterelements (4)** an einem Pfosten (2) einer Tragkonstruktion (1) nach einem der Ansprüche 1 bis 14 einer Photovoltaik-Anlage (25),
- wobei die Tragkonstruktion (1) mehrere Pfosten (2) aufweist, die an oder im Erdreich befestigt, insbesondere verankert, sind, und wobei an den Pfosten (2) Riegel (3) befestigt werden, um so zwei benachbarte Pfosten (2) miteinander zu verbinden,
- wobei die Riegel (3) jeweils mittels wenigstens eines separaten Adapterelements (4) an einem der Pfosten (2) befestigt werden, **dadurch gekennzeichnet,**
- **dass** das jeweilige Adapterelement (4) flächig an wenigstens zwei Abstützflächen (8a, 8b, 8c, 9a, 9b, 9c, 9d) des Pfostens (2) abgestützt wird, die in unterschiedlichen Richtungen jeweils quer zu einer Längsachse (29) des Pfostens (2) verlaufen und/oder
- **dass** das jeweilige Adapterelement (4)
- in eine Durchgangsöffnung (5) eines der Pfosten (2), insbesondere von innen nach außen, eingesteckt wird und/oder
- innenseitig an eine Innenkontur (26) eines der Pfosten (2) angelegt wird, insbesondere flächig an zwei Innenflächen (8a, 8b) des Pfostens (2) abgestützt wird, die in unterschiedlichen Richtungen jeweils quer zu einer Längsachse (29) des Pfostens (2) verlaufen, und/oder
- flächig an wenigstens zwei Außenflächen (9a, 9b, 9c) eines der Pfosten (2) abgestützt wird, die in unterschiedlichen Richtungen jeweils quer zu einer Längsachse (29) des Pfostens (2) verlaufen,
um so das Adapterelement (4) in eine finale Montageposition (19) an dem jeweiligen Pfosten (2) zu positionieren.

17. Verfahren gemäß dem vorhergehenden Anspruch, wobei das jeweilige Adapterelement (4) hierzu entlang einer Einsteckrichtung (17), vorzugsweise von innen nach außen, in Bezug auf den Pfosten (2) in die Durchgangsöffnung (5) eingesteckt wird, insbesondere um anschließend innenseitig flächig an dem Pfosten (2) anzuliegen,
- insbesondere wobei die finale Montageposition (19) des Adapterelements (4) erst durch ein Verschieben und/oder Verkippen des Adapterelements (4) in einer quer zur Einsteckrichtung (17) verlaufenden Verschieberichtung (18) erreicht wird, während das Adapterelement (4) bereits in die Durchgangsöffnung (5) eingesteckt ist,
- vorzugweise sodass das Adapterelement (4) in der finalen Montageposition (19) an einer Anlagekante (20) des Pfostens (2) anliegt, die die Durchgangsöffnung (5) begrenzt.

18. Verfahren gemäß Anspruch 16 oder 17, wobei das jeweilige Adapterelement (4) vorab durch eine erste Durchgangsöffnung (5) eines der Pfosten (2), insbesondere von außen nach innen in Bezug auf den Pfosten (2), hindurch gesteckt wird und anschließend durch eine zweite Durchgangsöffnung (5) dieses Pfostens (2), insbesondere von innen nach außen, hindurch gesteckt wird.

19. Verfahren gemäß einem der Ansprüche 16 bis 18, wobei das jeweilige Adapterelement (4) in schräger Orientierung in Bezug auf eine Längsachse (29) des Pfostens (2) entlang der Einsteckrichtung (17) in die Durchgangsöffnung (5) eingeführt wird, vorzugsweise und
- anschließend
- um eine Achse der Einsteckrichtung (17) gedreht wird und/oder
- quer zur Einsteckrichtung (17), insbesondere quer zu einer Längsrichtung (29) des Pfostens (2) und/oder in einer Längsrichtung (29) des Pfostens (2), verschoben wird,
um die finale Montageposition (19) zu erreichen,
- vorzugweise sodass das Adapterelement (4) in der finalen Montageposition (19) an einer Anlagekante (20) des Pfostens (2) anliegt, die die Durchgangsöffnung (5) begrenzt, und/oder auf einer Auflagefläche (13) des Pfostens (2) aufliegt.

## Claims

1. **Supporting structure (1)** for a photovoltaic system (25), which is designed to support upright bifacial photovoltaic modules (24),
- wherein the supporting structure (1) has multiple posts (2) which are fastened to or in the ground and are designed as longitudinal profiles (7),
- wherein crossbeams (3) are fastened to the posts (2), which in each case connect two adjacent posts (2) to one another and which are in each case arranged between two of the posts (2), wherein:
- the crossbeams (3) are each attached to one of the posts (2) by means of at least one separate adapter element (4),
- the adapter elements (4) each form retaining surfaces (6) which are aligned in the longitudinal direction of the associated crossbeam (3), and
- each of the crossbeams (3) is held at its respective end by at least one such retaining surface (6) formed by an adapter element (4),
**characterized in that**
- the respective adapter element (4) is supported flatly on at least two support surfaces (8a, 8b, 8c, 9a, 9b, 9c, 9d, 13, 20) of the post (2), which run in different directions in each case transversely to a longitudinal axis (29) of the post (2), specifically
- on a bearing surface (13) formed at the bottom of a recess (12) in the post (2) and on a flange (11) formed by a bent end (10) of the respective longitudinal profile (7), wherein the respective adapter element (4) is inserted for this purpose into a respective through-opening (5) in the post (2), or
- on two inner surfaces (8a, 8b) of the longitudinal profile (7) of the post (2), so that the adapter element (4) follows an inner contour (26) of the longitudinal profile (7), wherein the respective adapter element (4) is inserted for this purpose into a respective through-opening (5) in the post (2), or
- on two outer surfaces (9a, 9b) of the longitudinal profile (7) of the post (2), so that the adapter element (4) follows an outer contour of the longitudinal profile (7).

2. Supporting structure (1) according to claim 1,
- wherein at least one contact leg (27) of the adapter element (4) lies flat against an inner contour (26) of the longitudinal profile (7),
- particularly preferably wherein the adapter element (4) forms at least two contact legs (27) which are each supported flatly on two inner surfaces (8a, 8b, 8c) of the longitudinal profile (7), preferably wherein the two inner surfaces (8a, 8b, 8c) each extend in different directions transversely to a longitudinal axis (29) of the post (2) and/or wherein one of the inner surfaces (8a, 8c) extends transversely to an insertion direction (17) in which the adapter element (4) can be inserted into the through-opening (5).

3. Supporting structure (1) according to one of the preceding claims, wherein an opening cross-section of the through-opening (5) is selected to be smaller than a cross-section of the associated crossbeam (3), in particular so that the crossbeam (3) cannot be inserted into the through-opening (5).

4. Supporting structure (1) according to one of the preceding claims, wherein a width (31) of the through-opening (5) transverse to a longitudinal direction (29) of the post (2) is at most 80%, preferably at most 60%, of an associated width (32) of the post (2), or
- wherein respective contact edges (20a, 20b) of the post (2), which laterally outwardly delimit a respective associated through-opening (5a, 5b), have a spacing transverse to the longitudinal direction (29) of the post (2) which is at most 80%, preferably at most 60%, of an associated width of the post (2),
- in particular so that the adapter elements (4) inserted in the respective through-opening (5) can each hold crossbeams (3) whose width is less than 80%, in particular less than 60%, of the width of the associated post (2).

5. Supporting structure (1) according to one of the preceding claims, wherein only one adapter element (4) is inserted into some of the through-openings (5) of the respective post (2),
- in particular wherein the adapter elements (4) are designed to be flat, in particular free of bends, and/or
- in particular wherein the respective through-opening (5) has a width (31) which is smaller, preferably 2x or even 4x smaller, than a width (28) of the associated crossbeam (3) and/or
- wherein the respective through-opening (5) shows an aspect ratio of height to width measured in the longitudinal direction (29) of the post (2) of greater than 5:1, and/or
- wherein two cooperating through-openings (5a, 5b), into each of which only one adapter element (4) is inserted, are positioned symmetrically with respect to one another in relation to a central axis (33) of the post (2) extending in the longitudinal direction (29) of the post.

6. Supporting structure (1) according to one of the preceding claims, wherein at least two adapter elements (4a, 4b) each are inserted into some of the through-openings (5),
- and/or wherein the respective through-opening (5) has a width (31) which corresponds to a width (28) of an associated crossbeam (3), in particular exceeds this width (28), and/or
- wherein the respective through-opening (5) is positioned centrally with respect to a width (32) of the associated post (2) transversely to a longitudinal direction (30) of the associated crossbeam (3) and transversely to a longitudinal direction (29) of the associated post (2).

7. Supporting structure (1) according to one of the preceding claims, wherein the respective adapter element (4) is retained
- preferably by means of a slot-shaped recess (12) in the post (2) and/or
- by means of a slot-shaped recess (15) in the adapter element (4) itself
in the through-opening (5) secured against rotation and/or secured against displacement in at least two directions.

8. Supporting structure (1) according to one of the preceding claims, wherein the respective adapter element (4)
- rests on a bearing surface (13) of the associated post (2), in particular running transversely or at an angle to the longitudinal direction (29) of the post (2), and/or
- rests against a contact edge (20) of the post (2), preferably extending in the longitudinal direction (29) of the post (2), as soon as it is fully inserted into the through-opening (5),
- in particular so that a Z-position of the adapter element (4) relative to the post (2) is predetermined by the contact surface (13) and/or so that a Y-position of the adapter element (4) relative to the post (2) is predetermined by the contact edge (20).

9. Supporting structure (1) according to one of the preceding claims, wherein the respective adapter element (4) forms at least one retaining surface (6) on both sides of the post (2) on which the adapter element (4) is mounted, relative to a longitudinal direction (30) of the crossbeams (3), for retaining one of the crossbeams (3),
- preferably wherein the respective retaining surfaces (6) of the adapter element (4) project beyond the post (2) in the longitudinal direction (30) of the associated crossbeam (3) and/or
- wherein two retaining surfaces (6a, 6b/6c, 6d) of the adapter element (4) are aligned with one another on the left and right of the post (2).

10. Supporting structure (1) according to one of the preceding claims, wherein the respective adapter element (4) forms two tabs (21a, 21b), in particular a left and a right tab or an upper and a lower tab, which have respective retaining surfaces (6),
- in particular wherein the retaining surfaces (6) are provided for retaining a crossbeam (3) fastened with the adapter element (4) in pairs,
- preferably wherein the two tabs (21a, 21b) are connected to one another via at least one bridge (22) formed by the adapter element (4) and/or
- wherein the two tabs (21) each rest on the outside against a contact edge (20) of the post (2) bounding the through-opening (5).

11. Supporting structure (1) according to one of the preceding claims, wherein the respective adapter element (4) in a non-final mounting position, i.e. still before the final attachment to the associated post (2), can be displaced steplessly along a longitudinal direction (29) of the associated post (2), so as to define a Z-position of the adapter element (4) relative to the post (2),
- in particular because the adapter element (4) rests on the outside on an outer contour of the post (2) and/or on the inside on an inner contour (26) of the post (2) so as to be displaceable in the longitudinal direction (29) of the post (2) and/or because the adapter element (4) has a height in the longitudinal direction (29) of the post (2) which is smaller, preferably at least 20% smaller, than a height of the through-opening (5) in which the adapter element (4) is inserted.

12. Supporting structure (1) according to one of the preceding claims, wherein the respective adapter element (4) is guided on the outside around the respective post (2) to which the adapter element (4) is fastened, and
- wherein the adapter element (4) is supported flatly on at least two outer surfaces (9a, 9b, 9c) of the post (2), which surfaces each extend in different directions transversely to a longitudinal axis (29) of the post (2).

13. Supporting structure (1) according to the preceding claim, wherein the respective adapter element (4) rests on at least two outer surfaces (9a, 9b) of the associated post (2), is fastened preferably and to at least one of these two outer surfaces (9a, 9b), or
- wherein the adapter element (4) rests on at least three outer surfaces (9a, 9b, 9c) of the associated post (2), is fastened preferably and to at least one of these three outer surfaces (9a, 9b, 9c),
- - in particular wherein the adapter element (4) holds a respective crossbeam (3) on both sides of the post (2) by means of a retaining surface (6), preferably wherein the two retaining surfaces (6) are aligned with one another.

14. Supporting structure (1) according to one of the preceding claims, wherein the respective adapter element (4) is inserted into two through-openings (5) which are each formed in the post (2) to which the adapter element (4) is fastened,
- in particular wherein the adapter element (4) is guided once from outside to inside and once from inside to outside through the respective through-opening (5).

15. **Photovoltaic system (25)** having a plurality of, preferably bifacial, photovoltaic modules (24) which are arranged upright on a supporting structure (1),
**characterized in that**
- the supporting structure (1) is designed according to one of the preceding claims,
- preferably wherein two posts (2) and two crossbeams (3) of the supporting structure (1) each span a substantially rectangular mounting field in which at least one of the photovoltaic modules (24) is arranged.

16. **Method for mounting an adapter element (4)** on a post (2) of a supporting structure (1) according to one of claims 1 to 14 of a photovoltaic system (25),
- wherein the supporting structure (1) has a plurality of posts (2) which are fastened, in particular anchored, to or in the ground, and wherein crossbeams (3) are fastened to the posts (2) in order to connect two adjacent posts (2) to one another,
- wherein the crossbeams (3) are each fastened to one of the posts (2) by means of at least one separate adapter element (4),
**characterized in that**
- the respective adapter element (4) is supported flatly on at least two support surfaces (8a, 8b, 8c, 9a, 9b, 9c, 9d) of the post (2), which run in different directions in each case transversely to a longitudinal axis (29) of the post (2) and/or
- **in that** the respective adapter element (4)
- is inserted into a through-opening (5) of one of the posts (2), in particular from the inside to the outside, and/or
- is applied on the inside to an inner contour (26) of one of the posts (2), in particular is supported flat against two inner surfaces (8a, 8b) of the post (2), which each extend in different directions transversely to a longitudinal axis (29) of the post (2), and/or
- is supported flat on at least two outer surfaces (9a, 9b, 9c) of one of the posts (2), which each extend in different directions transversely to a longitudinal axis (29) of the post (2),
in order to position the adapter element (4) in a final mounting position (19) on the respective post (2).

17. Method according to the preceding claim, wherein the respective adapter element (4) is inserted into the through-opening (5) for this purpose along an insertion direction (17), preferably from the inside to the outside, with respect to the post (2), in particular in order subsequently to lie flat against the post (2) on the inside,
- in particular wherein the final mounting position (19) of the adapter element (4) is only reached by displacing and/or tilting the adapter element (4) in a displacement direction (18) extending transversely to the insertion direction (17) while the adapter element (4) is already inserted into the through-opening (5),
- preferably so that the adapter element (4) in the final mounting position (19) rests against a contact edge (20) of the post (2), which defines the through-opening (5).

18. Method according to claim 16 or 17, wherein the respective adapter element (4) is inserted in advance through a first through-opening (5) of one of the posts (2), in particular from the outside to the inside with respect to the post (2), and is then inserted through a second through-opening (5) of this post (2), in particular from the inside to the outside.

19. Method according to one of claims 16 to 18, wherein the respective adapter element (4) is inserted into the through-opening (5) in an oblique orientation with respect to a longitudinal axis (29) of the post (2) along the insertion direction (17), preferably and
- subsequently
- is rotated about an axis of the insertion direction (17) and/or
- is displaced transversely to the insertion direction (17), in particular transversely to a longitudinal direction (29) of the post (2) and/or in a longitudinal direction (29) of the post (2),
to reach the final mounting position (19),
- preferably so that the adapter element (4) in the final mounting position (19) rests against a contact edge (20) of the post (2), which defines the through-opening (5), and/or rests on a support surface (13) of the post (2).

## Revendications

1. **Structure porteuse (1)** pour une installation photovoltaïque (25), conçue pour porter des modules photovoltaïques bifaces (24) disposés verticalement,
- laquelle structure porteuse (1) comporte plusieurs poteaux (2) qui sont fixés sur ou dans la terre et conformés comme des profilés allongés (7),
- dans laquelle sont fixées sur les poteaux (2) des barres (3) qui relient les poteaux (2) voisins entre eux deux par deux et qui sont disposées chacune entre deux des poteaux (2),
- les barres (3) étant fixées chacune à un des poteaux (2) au moyen d'au moins un élément adaptateur (4) séparé,
- les éléments adaptateurs (4) formant chacun des surfaces de maintien (6) orientées dans le sens de la longueur de la barre (3) correspondante et
- chacune des barres (3) étant retenue à son extrémité respective par au moins une telle surface de maintien (6) formée par un élément adaptateur (4),
**caractérisée en ce que**
- l'élément adaptateur (4) respectif s'appuie à plat sur au moins deux surfaces d'appui (8a, 8b, 8c, 9a, 9b, 9c, 9d, 13, 20) du poteau (2) qui s'étendent dans des directions différentes dans le sens transversal par rapport à un axe longitudinal (29) du poteau (2), à savoir
sur une surface d'appui (13) formée au fond d'un creux (12) dans le poteau (2) et sur une bride (11) formée par une extrémité (10) recourbée du profilé allongé (7) correspondant, l'élément adaptateur (4) correspondant étant inséré pour cela dans une ouverture traversante (5) correspondante dans le poteau (2), ou
sur deux surfaces intérieures (8a, 8b) du profilé allongé (7) du poteau (2), de sorte que l'élément adaptateur (4) suit un contour intérieur (26) du profilé allongé (7), l'élément adaptateur (4) correspondant étant inséré pour cela dans une ouverture traversante (5) correspondante dans le poteau (2), ou
sur deux surfaces extérieures (9a, 9b) du profilé allongé (7) du poteau (2), de sorte que l'élément adaptateur (4) suit un contour extérieur du profilé allongé (7).

2. Structure porteuse (1) selon la revendication 1,
- dans laquelle au moins un bras d'application (27) de l'élément adaptateur (4) repose à plat sur un contour intérieur (26) du profilé allongé (7),
- l'élément adaptateur (4) formant de préférence au moins deux bras d'application (27) qui s'appuient chacun à plat sur deux surfaces intérieures (8a, 8b, 8c) du profilé allongé (7), les deux surfaces intérieures (8a, 8b, 8c) s'étendant de préférence dans des directions différentes dans le sens transversal par rapport à un axe longitudinal (29) du poteau (2) et/ou une des surfaces intérieures (8a, 8c) s'étendant transversalement par rapport à une direction d'insertion (17) dans laquelle l'élément adaptateur (4) peut être inséré dans l'ouverture traversante (5).

3. Structure porteuse (1) selon l'une des revendications précédentes, dans laquelle une section d'ouverture de l'ouverture traversante (5) est choisie plus petite qu'une section de la barre (3) correspondante, en particulier de telle sorte que la barre (3) ne puisse pas être introduite dans l'ouverture traversante (5).

4. Structure porteuse (1) selon l'une des revendications précédentes, dans laquelle une largeur (31) de l'ouverture traversante (5) dans le sens transversal par rapport à un sens de la longueur (29) du poteau (2) représente au maximum 80 %, de préférence au maximum 60 % d'une largeur (32) correspondante du poteau (2), ou
- dans laquelle des bords d'application (20a, 20b) respectifs du poteau (2) délimitant chaque ouverture traversante (5a, 5b) correspondante vers l'extérieur dans le sens latéral présentent une distance dans le sens transversal par rapport à un sens de la longueur (29) du poteau (2) qui représente au maximum 80 %, de préférence au maximum 60 % d'une largeur (32) correspondante du poteau (2),
- en particulier de telle sorte que les éléments adaptateurs (4) insérés dans l'ouverture traversante (5) correspondante puissent saisir chacun des barres (3) dont la largeur représente au maximum 80 %, de préférence au maximum 60 % d'une largeur (32) correspondante du poteau (2) correspondant.

5. Structure porteuse (1) selon l'une des revendications précédentes, dans laquelle un seul élément adaptateur (4) est inséré dans certaines des ouvertures traversantes (5) des poteaux (2) correspondants,
- en particulier dans laquelle les éléments adaptateurs (4) sont de forme plate, en particulier sans pliures, et/ou
- en particulier dans laquelle chaque ouverture traversante (5) présente une largeur (31) qui est plus petite qu'une largeur (28) de la barre (3) correspondante, de préférence 2 voire 4 fois plus petite, et/ou
- dans laquelle l'ouverture traversante (5) présente un rapport d'aspect entre la hauteur et la largeur mesurée dans le sens de la longueur (29) du poteau (2) de plus de 5:1, et/ou
- dans laquelle deux ouvertures traversantes (5a, 5b) qui coopèrent, dans chacune desquelles un seul élément adaptateur (4) est inséré, sont disposées de façon symétrique l'une par rapport à l'autre et par rapport à un axe médian (33) du poteau (2) orienté dans le sens de la longueur (29) du poteau.

6. Structure porteuse (1) selon l'une des revendications précédentes, dans laquelle au moins deux éléments adaptateurs (4a, 4b) sont insérés dans certaines des ouvertures traversantes (5),
- et/ou dans laquelle l'ouverture traversante (5) correspondante présente une largeur (31) correspondant à une largeur (28) d'une barre (3) correspondante, en particulier dépasse cette largeur (28), et/ou
- dans laquelle l'ouverture traversante (5) est positionnée au milieu par rapport à une largeur (32) du poteau (2) correspondant dans le sens transversal par rapport à un sens de la longueur (30) de la barre (3) correspondante et dans le sens transversal par rapport à un sens de la longueur (29) du poteau (2) correspondant.

7. Structure porteuse (1) selon l'une des revendications précédentes, dans laquelle chaque élément adaptateur (4) est retenu dans l'ouverture traversante (5)
- de préférence au moyen d'un creux en forme de fente (12) dans le poteau (2) et/ou
- au moyen d'un creux en forme de fente (15) dans l'élément adaptateur (4) lui-même,
de façon à empêcher sa rotation et/ou de façon à empêcher sa translation dans au moins deux directions.

8. Structure porteuse (1) selon l'une des revendications précédentes, dans laquelle chaque élément adaptateur (4)
- repose sur une surface d'appui (13) du poteau (2) correspondant qui s'étend en particulier transversalement ou à l'oblique par rapport au sens de la longueur (29) du poteau (2) et/ou
- repose sur un bord d'application (20) du poteau (2), qui s'étend de préférence dans le sens de la longueur (29) du poteau (2),
de sorte qu'il est complètement inséré dans l'ouverture traversante (5),
- en particulier de façon à définir une position sur Z de l'élément adaptateur (4) par rapport aux poteaux (2) par la surface d'appui (13) et/ou de façon à définir une position sur Y de l'élément adaptateur (4) par rapport au poteau (2) par le bord d'application (20).

9. Structure porteuse (1) selon l'une des revendications précédentes, dans laquelle chaque élément adaptateur (4) forme, par rapport à un sens de la longueur (30) de la barre (3), sur les deux faces du poteau (2) sur lequel l'élément adaptateur (4) est monté, au moins une surface de maintien (6) pour retenir l'une des barres (3),
- les surfaces de maintien (6) correspondantes de l'élément adaptateur (4) dépassant de préférence du poteau (2) dans le sens de la longueur (30) de la barre (3) correspondante et/ou
- deux surfaces de maintien (6a, 6b/6c, 6d) de l'élément adaptateur (4) étant alignées l'une avec l'autre à gauche et à droite du poteau (2).

10. Structure porteuse (1) selon l'une des revendications précédentes, dans laquelle chaque élément adaptateur (4) forme deux pattes (21a, 21b), en particulier une patte de gauche et une patte de droite ou une patte supérieure et une patte inférieure, qui présentent des surfaces de maintien (6) correspondantes,
- les surfaces de maintien (6) étant en particulier prévues pour retenir à deux une barre (3) fixée avec l'élément adaptateur (4),
- les deux pattes (21a, 21b) étant de préférence reliées l'une à l'autre par au moins un pont (22) formé par l'élément adaptateur (4) et/ou
- les deux pattes (21) reposant chacune sur l'extérieur sur un bord d'application (20) du poteau (2) délimitant l'ouverture traversante (5).

11. Structure porteuse (1) selon l'une des revendications précédentes, dans laquelle chaque élément adaptateur (4) dans une position de montage non finale, autrement dit avant la fixation finale au poteau (2) correspondant, peut être déplacé de façon continue dans le sens de la longueur (29) du poteau (2) correspondant, pour fixer ainsi une position sur Z de l'élément adaptateur (4) par rapport au poteau (2),
- en particulier parce que l'élément adaptateur (4) repose sur l'extérieur sur un contour extérieur du poteau (2) et/ou sur l'intérieur sur un contour intérieur (26) du poteau (2) avec possibilité de translation dans le sens de la longueur (29) du poteau (2) et/ou parce que l'élément adaptateur (4) présente une hauteur dans le sens de la longueur (29) du poteau (2) qui est plus petite, de préférence plus petite d'au moins 20 %, qu'une hauteur de l'ouverture traversante (5) dans laquelle l'élément adaptateur (4) est inséré.

12. Structure porteuse (1) selon l'une des revendications précédentes, dans laquelle chaque élément adaptateur (4) est guidé sur l'extérieur autour du poteau (2) correspondant auquel l'élément adaptateur (4) est fixé et
- dans laquelle l'élément adaptateur (4) s'appuie à plat sur au moins deux surfaces extérieures (9a, 9b, 9c) du poteau (2) qui s'étendent chacune dans des directions différentes dans le sens transversal par rapport à un axe longitudinal (29) du poteau (2).

13. Structure porteuse (1) selon la revendication précédente, dans laquelle chaque élément adaptateur (4) repose sur au moins deux surfaces extérieures (9a, 9b) du poteau (2) correspondant, de préférence et est fixé à au moins une de ces deux surfaces extérieures (9a, 9b), ou
- dans laquelle l'élément adaptateur (4) repose sur au moins trois surfaces extérieures (9a, 9b, 9c) du poteau (2) correspondant, et de préférence est fixé sur au moins une de ces trois surfaces extérieures (9a, 9b, 9c),
- en particulier, dans laquelle l'élément adaptateur (4) retient une barre (3) correspondante de part et d'autres du poteau (2) au moyen d'une surface de maintien (6),
les deux surfaces de maintien (6) étant de préférence alignées l'une avec l'autre.

14. Structure porteuse (1) selon l'une des revendications précédentes, dans laquelle chaque élément adaptateur (4) est inséré dans deux ouvertures traversantes (5) formées chacune dans le poteau (2) sur lequel l'élément adaptateur (4) est fixé,
- en particulier, dans laquelle l'élément adaptateur (4) est guidé pour cela une fois de l'extérieur vers l'intérieur et une fois de l'intérieur vers l'extérieur à travers l'ouverture traversante (5) correspondante.

15. **Installation photovoltaïque (25)** avec plusieurs modules photovoltaïques (24), de préférence bifaces, qui sont disposés verticalement sur une structure porteuse (1), **caractérisée en ce que**
- la structure porteuse (1) est conformée selon l'une des revendications précédentes,
- deux poteaux (2) et deux barres (3) de la structure porteuse (1) délimitant, de préférence, un champ de montage sensiblement rectangulaire, dans lequel au moins un des modules photovoltaïques (24) est disposé.

16. **Procédé pour le montage d'un élément adaptateur (4)** sur un poteau (2) d'une structure porteuse (1) selon une des revendications 1 à 14 d'une installation photovoltaïque (25),
- dans lequel la structure porteuse (1) comporte plusieurs poteaux (2) qui sont fixés sur ou dans la terre, en particulier ancrés, et dans laquelle des barres (3) sont fixées aux poteaux (2) pour relier deux poteaux (2) voisins l'un à l'autre,
- dans lequel les barres (3) sont fixées chacune sur un des poteaux (2) au moyen d'au moins un élément adaptateur (4) séparé,
**caractérisé en ce que**
- chaque élément adaptateur (4) s'appuie à plat sur au moins deux surfaces d'appui (8a, 8b, 8c, 9a, 9b, 9c, 9d) du poteau (2) qui s'étendent chacune dans des directions différentes dans le sens transversal par rapport à un axe longitudinal (29) du poteau (2) et/ou
- **en ce que** chaque élément adaptateur (4)
- est inséré dans une ouverture traversante (5) de l'un des poteaux (2), en particulier de l'intérieur vers l'extérieur, et/ou
- est posé sur l'intérieur sur un contour intérieur (26) de l'un des poteaux (2), en particulier s'appuie à plat sur deux surfaces intérieures (8a, 8b) du poteau (2) qui s'étendent chacune dans des directions différentes dans le sens transversal par rapport à un axe longitudinal (29) du poteau (2), et/ou
- s'appuie à plat sur au moins deux surfaces extérieures (9a, 9b, 9c) de l'un des poteaux (2) qui s'étendent chacune dans des directions différentes dans le sens transversal par rapport à un axe longitudinal (29) du poteau (2), pour positionner ainsi l'élément adaptateur (4) dans une position de montage finale (19) sur les poteaux (2) correspondants.

17. Procédé selon la revendication précédente, dans lequel chaque élément adaptateur (4) est inséré pour cela dans l'ouverture traversante (5) le long d'une direction d'insertion (17), de préférence de l'intérieur vers l'extérieur, par rapport aux poteaux (2), en particulier pour reposer finalement à plat sur l'intérieur sur les poteaux (2),
- dans lequel, en particulier, la position de montage finale (19) de l'élément adaptateur (4) n'est atteinte que par une translation et/ou un basculement de l'élément adaptateur (4) dans un sens de déplacement (18) transversal par rapport à la direction d'insertion (17), tandis que l'élément adaptateur (4) est déjà inséré dans l'ouverture traversante (5),
- de préférence de telle sorte que l'élément adaptateur (4) repose dans la position de montage finale (19) sur un bord d'appui (20) du poteau (2) qui délimite l'ouverture traversante (5).

18. Procédé selon la revendication 16 ou 17, dans lequel chaque élément adaptateur (4) est au préalable inséré à travers une première ouverture traversante (5) de l'un des poteaux (2), en particulier de l'extérieur vers l'intérieur par rapport aux poteaux (2), puis passé à travers une deuxième ouverture traversante (5) de ce poteau (2), en particulier de l'intérieur vers l'extérieur.

19. Procédé selon l'une des revendications 16 à 18, dans lequel chaque élément adaptateur (4) est inséré dans l'ouverture traversante (5) le long de la direction d'insertion (17) selon une orientation oblique par rapport à un axe longitudinal (29) du poteau (2), et de préférence
- ensuite
- tourné autour d'un axe de la direction d'insertion (17) et/ou
- déplacé transversalement par rapport à la direction d'insertion (17), en particulier transversalement par rapport à un sens de la longueur (29) du poteau (2) et/ou dans un sens de la longueur (29) du poteau (2),
pour atteindre la position de montage finale (19),
- de préférence de telle manière que l'élément adaptateur (4) repose dans la position de montage finale (19) sur un bord d'appui (20) du poteau (2) qui délimite l'ouverture traversante (5), et/ou repose sur une surface d'appui (13) du poteau (2).
